# EUROPEAN PATENT SPECIFICATION

(11) **EP 3 618 505 B1**
(45) Date of publication and mention of the grant of the patent: **17.04.2024**
(21) Application number: 18818764.5
(22) Date of filing: 14.06.2018
(51) Int. Cl.: H04W 48/08, H04W 48/02, H04W 48/18

(54) **COMMUNICATION METHOD, NETWORK DEVICE AND TERMINAL DEVICE**
KOMMUNIKATIONSVERFAHREN, NETZWERKVORRICHTUNG UND ENDGERÄT
PROCÉDÉ DE COMMUNICATION, DISPOSITIF DE RÉSEAU ET DISPOSITIF TERMINAL

(30) Priority: 16.06.2017 CN 201710457238
(43) Date of publication of application: 04.03.2020
(73) Proprietor: Huawei Technologies Co., Ltd., Shenzhen, Guangdong 518129 (CN)
(72) Inventor: JIN, Yinghao, Shenzhen, Guangdong 518129 (CN); BI, Hao, Shenzhen, Guangdong 518129 (CN); HAN, Feng, Shenzhen, Guangdong 518129 (CN); LOU, Chong, Shenzhen, Guangdong 518129 (CN)
(74) Representative: Körber, Martin Hans
(86) International application number: PCT/CN2018/091355
(87) International publication number: WO 2018/228505

(56) References cited:
- EP-A1- 2 854 456
- WO-A2-2017/059829
- CN-A- 106 851 589
- US-A1- 2017 070 892
- US-A1- 2017 079 059
- US-A1- 2017 164 349
- HUAWEI ET AL: "Key Issues for Support of Network Slicing in RAN", 3GPP DRAFT; R2-1700099, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, Washington, USA; 20171117 - 20171119 7 January 2017 (2017-01-07), XP051203850, Retrieved from the Internet: URL:http://www.3gpp.org/ftp/tsg_ran/WG2_RL 2/TSGR2_AHs/2017_01_NR/Docs/ [retrieved on 2017-01-07]
- ZTE ET AL: "Consideration on the NW slice in RAN", 3GPP DRAFT; R2-1702843-CONSIDERATION ON THE NW SLICE IN RAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051244827, Retrieved from the Internet: URL:http://www.3gpp.org/ftp/Meetings_3GPP_ SYNC/RAN2/Docs/ [retrieved on 2017-04-03]
- ZTE ZTE MICROELECTRONICS: "Consideration on the impact of NW slicing on RAN", 3GPP DRAFT; R2-167845 CONSIDERATION ON THE IMPACT OF NW SLICING ON RAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Reno, USA; 20161114 - 20161118 13 November 2016 (2016-11-13), XP051177608, Retrieved from the Internet: URL:http://www.3gpp.org/ftp/Meetings_3GPP_ SYNC/RAN2/Docs/ [retrieved on 2016-11-13]
- Xiaomi (Rapporteur): "Report of email discussion: [97bis#14][NR] Slicing", 3GPP TSG-RAN WG2 meeting #98, no. R2-1704128, 5 May 2017 (2017-05-05), XP051263745, Hangzhou, China
- Huawei: "Add requirements of management support for RAN configuration", 3GPP TSG SA WG5 (Telecom Management) meeting #113, no. S5-173147, 28 April 2017 (2017-04-28), XP051269862, West Palm Beach, Florida (US)

## Description

### TECHNICAL FIELD

This application relates to the communications field, and more specifically, to a communication method, a network device and terminal device.

### BACKGROUND

A network slicing technology has been proposed as a key technology in future communications system study, to enable a future network to support abundant services, so as to serve various industries in the society. For example, an enhanced mobile broadband (Enhanced Mobile Broadband, eMBB) service represented by virtual reality and augmented reality, an ultra-reliable low-latency communication (Ultra-Reliable and Low-Latency, URLLC) service represented by automatic driving, industrial control, and the like, and a massive machine-type communications (massive machine type of communication, mMTC) service represented by smart logistics, sensors, and the like greatly extend a service range of a communications system.

In an existing communications system, all network services are placed on a common transmission channel, and consequently, greatly different quality of service (Quality of Service, QoS) requirements of different services in the future network cannot be met. Therefore, in study of a next-generation 5G communications system, the network slicing technology emerges. A network slice may be any combination of a terminal device, an access network, a transport network, a core network, and an application server. In a network slice architecture, how to improve communication efficiency is a problem worthy to be considered.

US 2017/164349 discloses an architecture where a sliced RAN interacts with a plurality of Core Network Slices.

US 2017/070892 provide a communication network system having an adaptive structure according to service requirements based on virtualization of a network resource. Huawei et al, "Key Issues for Support of Network Slicing in RAN", vol. RAN WG2, no. Spokane, Washington, USA; 20171117 - 20171119, (20170107), 3GPP DRAFT; R2-1700099 discusses that a user equipment may provide network slice selection assistance information to the network than can be used to select the set of RAN and CN part of the appropriate network slice instance for the differentiated service. ZTE et al, "Consideration on the NW slice in RAN", vol. RAN WG2, no. Spokane, USA; 20170403 - 20170407, (20170403), 3GPP DRAFT; R2-1702843 discusses access control for network slicing. ZTE et al, "Consideration on the impact of NW slicing on RAN", vol. RAN WG2, no. Reno, USA; 20161114 - 20161118, (20161113), 3GPP DRAFT; R2-167845 proposes to study the procedure for network slice selection.

### SUMMARY

This application provides a communication method according to independent claim 1 or 11, a network device according to independent claim 13, and a terminal device according to independent claim 14, to improve communication efficiency. Additional features of the invention are provided in the dependent claims. In the following, parts of the description and drawings referring to embodiments which are not covered by the claims are not presented as embodiments of the invention, but as examples useful for understanding the invention.

According to a first aspect, a communication method is provided, and includes: obtaining, by a radio access network RAN device, information about at least one RAN network slice identifier; and sending, by the RAN device, first information to a terminal device, where the first information includes the at least one RAN network slice identifier, and there is a correspondence between the at least one RAN network slice identifier and a core network network slice identifier.
In this embodiment of this application, in communication in a radio access network, the RAN network slice identifier is used to classify network slices. There is the correspondence between the RAN network slice identifier and the core network network slice identifier, so that the RAN network slice identifier may be allocated for communication based on a requirement of the radio access network, and therefore communication efficiency of the radio access network can be improved.

In a possible implementation, the first information further includes access control information corresponding to the at least one RAN network slice identifier, and the access control information includes information for instructing the terminal device to access a radio access network.

For example, the RAN device may broadcast different RAN network slice identifiers and access barring parameters corresponding to the different RAN network slice identifiers, instead of broadcasting different core network network slice identifiers and access barring parameters corresponding to the different core network network slice identifiers, to perform access control on the terminal, so as to reduce broadcast content, reduce air interface overheads, and improve communication efficiency. In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In a possible implementation, the access control information includes an access factor, and the access factor includes at least one of the following: an access control barring parameter and a barring parameter for application-specific congestion control used for data communication.

In a possible implementation, the access factor is determined based on an access class or an access category corresponding to the at least one RAN network slice identifier.

In a possible implementation, the method further includes: receiving, by the RAN device, third information from the terminal device, where the third information includes a first RAN network slice identifier corresponding to a network slice that the terminal device requests to access.

In a possible implementation, the third information is a radio resource control RRC connection request message, and the method further includes: sending, by the RAN device, an RRC connection response message to the terminal device based on the first RAN network slice identifier.

The RRC connection response message may include an RRC connection setup message, an RRC connection reject message, or an RRC connection suspend message.

In this embodiment of this application, the RAN device may determine, based on the identifier of the RAN network slice that the terminal device requests to access, whether to set up an RRC connection to the terminal device, so that a service can be flexibly provided when a network is congested, for example, a service is preferentially provided for a high-priority service, and therefore communication efficiency can be improved.

In a possible implementation, the sending, by the RAN device, an RRC connection response message to the terminal device based on the first RAN network slice identifier includes: sending, by the RAN device, an RRC connection setup message to the terminal device when priority information corresponding to the first RAN network slice identifier meets a predetermined rule; or sending, by the RAN device, an RRC connection reject message to the terminal device when priority information corresponding to the second RRN network slice identifier does not meet a predetermined rule.

In a possible implementation, the sending, by the RAN device, an RRC connection response message to the terminal device based on the first RAN network slice identifier includes: sending, by the RAN device, an RRC connection setup message to the terminal device when an idle network resource of the network slice corresponding to the first RAN network slice identifier is greater than or equal to a preset threshold; or sending, by the RAN device, an RRC connection reject message to the terminal device when an idle network resource of the network slice corresponding to the first RAN network slice identifier is less than a preset threshold.

In a possible implementation, the first information further includes information used to indicate the correspondence between the at least one RAN network slice identifier and the core network network slice identifier.

In a possible implementation, a network slice corresponding to the at least one RAN network slice identifier includes a network slice allowed to be accessed by the terminal device.

It should be understood that the network slice allowed to be accessed by the terminal device may change with a network status, for example, may change based on a time or a location of the terminal. Therefore, the RAN device can flexibly send the first information based on a network status change.

In a possible implementation, the method further includes: receiving, by the RAN device, information about a slice allowed to be accessed from a core network device, where the information about the slice allowed to be accessed is used to indicate the network slice allowed to be accessed by the terminal device.

In a possible implementation, the method further includes: determining, by the RAN device based on the first RAN network slice identifier, a core network device that needs to be accessed by the terminal device.

In this embodiment of this application, the RAN device may select, based on the RAN network slice identifier, the core network device that needs to be accessed on a routing path, so that communication connection setup efficiency is improved.

In a possible implementation, the third information is carried in a radio resource control RRC connection complete message.

In a possible implementation, the first information is carried in an RRC message or a broadcast message.

In a possible implementation, the obtaining, by a RAN device, information about at least one RAN network slice identifier includes: receiving, by the RAN device, the information about the at least one RAN network slice identifier from a network manager.

In a possible implementation, the method further includes: sending, by the RAN device, second information to the core network device, where the second information is used to indicate the correspondence between the at least one RAN network slice identifier and the core network network slice identifier.

According to a second aspect, a communication method is provided, and includes: receiving, by a terminal device, first information from a radio access network RAN device, where the first information includes at least one RAN network slice identifier, and there is a correspondence between the at least one RAN network slice identifier and a core network network slice identifier; and communicating, by the terminal device, with the RAN device based on the first information.

In this embodiment of this application, in communication in a radio access network, the RAN network slice identifier is used to classify network slices. There is the correspondence between the RAN network slice identifier and the core network network slice identifier, so that the RAN network slice identifier may be allocated for communication based on a requirement of the radio access network, and therefore communication efficiency of the radio access network can be improved.

In this embodiment of this application, the RAN network slice identifier is used to perform a communication activity in the radio access network, and the RAN network slice identifier is used to classify and aggregate core network network slice identifiers, so that air interface overheads of the core network network slice identifiers can be reduced, and communication efficiency can be improved.

In this embodiment of this application, because the RAN network slice identifier instead of the core network network slice identifier is used in the radio access network to perform the communication activity in the radio access network, a possibility that the core network network slice identifier directly associated with the network slice is exposed in air interface transmission is reduced, so that security of the air interface transmission is improved.

In a possible implementation, the first information further includes access control information corresponding to the at least one RAN network slice identifier, and the communicating, by the terminal device, with the RAN device based on the first information includes: accessing, by the terminal device, a radio access network based on the access control information.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In a possible implementation, the access control information includes an access factor, and the access factor includes at least one of the following: an access control barring parameter and a barring parameter for application-specific congestion control used for data communication. The accessing, by the terminal device, a radio access network based on the access control information includes: accessing, by the terminal device, the radio access network based on the access factor.

In a possible implementation, the access factor is determined based on an access class or an access category corresponding to the at least one RAN network slice identifier.

In a possible implementation, the communicating, by the terminal device, with the RAN device based on the first information includes: sending, by the terminal device, a radio resource control RRC connection request message to the RAN device, where the RRC connection request message includes a first RAN network slice identifier corresponding to a network slice allowed to be accessed by the terminal device, and the first RAN slice identifier is determined based on the first information.

In a possible implementation, the first information further includes information used to indicate the correspondence between the at least one RAN network slice identifier and the core network network slice identifier.

In a possible implementation, a network slice corresponding to the at least one RAN network slice identifier includes a network slice allowed to be accessed by the terminal device.

In a possible implementation, the method further includes: sending, by the terminal device, third information to the RAN device, where the third information includes a first RAN network slice identifier corresponding to a network slice that the terminal device requests to access.

In a possible implementation, the third information is used by the RAN device to determine a core network device that needs to be accessed by the terminal device.

In a possible implementation, the third information is carried in a radio resource control RRC connection complete message.

In a possible implementation, the first information is carried in an RRC message or a broadcast message.

According to a third aspect, a communication method is provided, and includes: obtaining, by a RAN device, a RAN network slice identifier; and sending, by the RAN device, first information to a terminal device, where the first information includes the RAN network slice identifier and access control information corresponding to the RAN network slice identifier, the access control information includes information for instructing the terminal device to access a radio access network, and there is a correspondence between the RAN network slice identifier and a core network network slice identifier.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In a possible implementation, the access control information includes an access factor, and the access factor includes at least one of the following: an access control barring parameter and a barring parameter for application-specific congestion control used for data communication.

In a possible implementation, the access factor is determined based on an access class or an access category corresponding to the RAN network slice identifier.

In a possible implementation, the method further includes: receiving, by the RAN device, a radio resource control RRC connection request message from the terminal device, where the RRC connection request message includes a first RAN network slice identifier corresponding to a network slice that the terminal device requests to access.

In a possible implementation, the method further includes: sending, by the RAN device, an RRC connection response message to the terminal device based on the first RAN network slice identifier.

In a possible implementation, the sending, by the RAN device, an RRC connection response message to the terminal device based on the first RAN network slice identifier includes: sending, by the RAN device, an RRC connection setup message to the terminal device when priority information corresponding to the first RAN network slice identifier meets a predetermined rule; or sending, by the RAN device, an RRC connection reject message to the terminal device when priority information corresponding to the second RRN network slice identifier does not meet a predetermined rule.

In a possible implementation, the sending, by the RAN device, an RRC connection response message to the terminal device based on the first RAN network slice identifier includes: sending, by the RAN device, an RRC connection setup message to the terminal device when an idle network resource of the network slice corresponding to the first RAN network slice identifier is greater than or equal to a preset threshold; or sending, by the RAN device, an RRC connection reject message to the terminal device when an idle network resource of the network slice corresponding to the first RAN network slice identifier is less than a preset threshold.

In a possible implementation, the first information is carried in a broadcast message.

According to a fourth aspect, a communication method is provided, and includes: receiving, by a terminal device, first information from a RAN device, where the first information includes a RAN network slice identifier and access control information corresponding to the RAN network slice identifier, the access control information includes information for instructing the terminal device to access a radio access network, and there is a correspondence between the RAN network slice identifier and a core network network slice identifier; and communicating, by the terminal device, with the RAN device based on the RAN network slice identifier and the access control information.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In a possible implementation, the access control information includes an access factor, and the access factor includes at least one of the following: an access control barring parameter and a barring parameter for application-specific congestion control used for data communication.

In a possible implementation, the access factor is determined based on an access class or an access category corresponding to the RAN network slice identifier.

In a possible implementation, the method further includes: sending, by the terminal device, an RRC connection request message to the RAN device, where the RRC connection request message includes a first RAN network slice identifier corresponding to a network slice that the terminal device requests to access.

In a possible implementation, the first information is carried in a broadcast message.

According to a fifth aspect, a communication method is provided, and includes: receiving, by a RAN device, third information from a terminal device, where the third information includes a first RAN network slice identifier corresponding to a network slice that the terminal device requests to access, and there is a correspondence between the RAN network slice identifier and a core network network slice identifier; and determining, by the RAN device based on the first RAN network slice identifier, a core network device that needs to be accessed by the terminal device.

In this embodiment of this application, the RAN device may select, based on the RAN network slice identifier, the core network device that needs to be accessed on a routing path, so that communication connection setup efficiency is improved.

In a possible implementation, the first message is carried in a radio resource control RRC connection complete message.

According to a sixth aspect, a communication method is provided, and includes: determining, by a terminal device, third information, where the third information includes a first RAN network slice identifier corresponding to a network slice that the terminal device requests to access, and there is a correspondence between the RAN network slice identifier and a core network network slice identifier; and sending, by the terminal device, the third information to a RAN device, so that the terminal device determines a core network device that needs to be accessed.

In this embodiment of this application, the RAN device may select, based on the RAN network slice identifier, the core network device that needs to be accessed on a routing path, so that communication connection setup efficiency is improved.

In a possible implementation, the first message is carried in a radio resource control RRC connection complete message.

According to a seventh aspect, a network device is provided. The network device includes a RAN device, configured to perform the method according to the first aspect or any possible implementation of the first aspect. Specifically, the network device includes a unit configured to perform the method according to the first aspect or any possible implementation of the first aspect.

According to an eighth aspect, a terminal device is provided, and is configured to perform the method according to the second aspect or any possible implementation of the second aspect. Specifically, the terminal device includes a unit configured to perform the method according to the second aspect or any possible implementation of the second aspect.

According to a ninth aspect, a network device is provided. The network device includes a RAN device, configured to perform the method according to the third aspect or any possible implementation of the third aspect. Specifically, the network device includes a unit configured to perform the method according to the third aspect or any possible implementation of the third aspect.

According to a tenth aspect, a terminal device is provided, and is configured to perform the method according to the fourth aspect or any possible implementation of the fourth aspect. Specifically, the terminal device includes a unit configured to perform the method according to the fourth aspect or any possible implementation of the fourth aspect.

According to an eleventh aspect, a network device is provided. The network device includes a RAN device, configured to perform the method according to the fifth aspect or any possible implementation of the fifth aspect. Specifically, the network device includes a unit configured to perform the method according to the fifth aspect or any possible implementation of the fifth aspect.

According to a twelfth aspect, a terminal device is provided, and is configured to perform the method according to the sixth aspect or any possible implementation of the sixth aspect. Specifically, the terminal device includes a unit configured to perform the method according to the sixth aspect or any possible

According to a fourteenth aspect, a network device is provided, the network device includes a RAN device, and the network device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the first aspect or any possible implementation of the first aspect.

According to a fifteenth aspect, a terminal device is provided, and the terminal device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the second aspect or any possible implementation of the second aspect.

According to a sixteenth aspect, a network device is provided, the network device includes a RAN device, and the network device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the third aspect or any possible implementation of the third aspect.

According to a seventeenth aspect, a terminal device is provided, and the terminal device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the fourth aspect or any possible implementation of the fourth aspect.

According to an eighteenth aspect, a network device is provided, the network device includes a RAN device, and the network device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the fifth aspect or any possible implementation of the fifth aspect.

According to a nineteenth aspect, a terminal device is provided, and the terminal device includes a communications interface, a memory, a processor, and a bus system. The communications interface, the memory, and the processor are connected by using the bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to the sixth aspect or any possible implementation of the sixth aspect.

In the embodiments of this application, the RAN network slice identifier is used to perform a communication activity in the radio access network, and the RAN network slice identifier is used to classify and aggregate core network network slice identifiers, so that air interface overheads of the core network network slice identifiers can be reduced, and communication efficiency can be improved.

In the embodiments of this application, because the RAN network slice identifier instead of the core network network slice identifier is used in the radio access network to perform the communication activity in the radio access network, a possibility that the core network network slice identifier directly associated with the network slice is exposed in air interface transmission is reduced, so that security of the air interface transmission is improved.

### BRIEF DESCRIPTION OF DRAWINGS

FIG. 1 is a schematic diagram of an application scenario according to an embodiment of this application;
FIG. 2 is a schematic block diagram of a communication method according to an embodiment of this application;
FIG. 3 is a schematic flowchart of a communication method according to another embodiment of this application;
FIG. 4 is a schematic flowchart of a communication method according to another embodiment of this application;
FIG. 5 is a schematic flowchart of a communication method according to another embodiment of this application;
FIG. 6 is a schematic flowchart of a communication method according to another embodiment of this application;
FIG. 7 is a schematic block diagram of a communication method according to another embodiment of this application;
FIG. 8 is a schematic block diagram of a communication method according to another embodiment of this application;
FIG. 9 is a schematic block diagram of a communication method according to another embodiment of this application;
FIG. 10 is a schematic block diagram of a communication method according to another embodiment of this application;
FIG. 11 is a schematic block diagram of a communication method according to another embodiment of this application;
FIG. 12 is a schematic structural diagram of a network device according to an embodiment of this application;
FIG. 13 is a schematic structural diagram of a terminal device according to an embodiment of this application;
FIG. 14 is a schematic structural diagram of a network device according to another embodiment of this application; and
FIG. 15 is a schematic structural diagram of a terminal device according to another embodiment of this application.

### DESCRIPTION OF EMBODIMENTS

The following describes technical solutions in this application with reference to the accompanying drawings.

Before a communication method, an apparatus, and a system in this application are described, for ease of understanding content of this application, some terms in this specification are first described.

Network slices (Network slice) are logical networks that are customized on a physical or virtual network infrastructure based on different service requirements, tenants, or the like and that have different network capabilities and network characteristics. The network slice may be a complete end-to-end network that includes a terminal device, an access network, a transport network, a core network, and an application server, can provide a telecommunication service, and has a specific network capability. Alternatively, the network slice may be any combination of the terminal device, the access network, the transport network, the core network, and the application server. For example, the network slice includes only the access network and the core network. The network slice may have one or more of the following characteristics: The access network may be sliced or may not be sliced. The access network may be shared by a plurality of network slices. Different network slices may have different characteristics and include different network function modules.

In embodiments of this application, the network slice may also be referred to as a network slice instance (network slice instance, NSI) or a slice.

In some embodiments, a user in the embodiments of this application may include a user using a terminal device. In some other embodiments, a user in the embodiments of this application may alternatively include a terminal device connected to a network slice. The terminal device may include various handheld devices having a wireless communication function, a vehicle-mounted device, a wearable device, a computing device or another processing device connected to a wireless modem, and various forms of user equipment (User Equipment, UE), mobile stations (Mobile Station, MS), terminals (terminal), terminal devices (terminal device), and the like.

In the embodiments of this application, a radio access network (Radio Access Network, RAN) device may be a network device in a radio access network. For example, the RAN device may include various types of base stations. For example, the base station in the embodiments of this application may include various forms of macro base stations, micro base stations, relay nodes, access points, and the like. In systems that use different wireless access technologies, devices with a base station function may have different names. For example, the device with the base station function is referred to as an evolved NodeB (evolved NodeB, eNB, or eNodeB) in an LTE network, is referred to as a NodeB (Node B) or the like in a 3rd generation (3rd Generation, 3G) network, and may be referred to as a gNodeB (g Node B, gNB) in a 5th generation (5th Generation, 5G) network.

In the embodiments of this application, a core network (Core Network, CN) device may be a control plane anchor of a terminal device, and provide a function such as registration area (registration area) update for the terminal. For example, the core network device may include an access and mobility management function (Access and Mobility Management Function, AMF). The AMF may be a network device configured to provide functions such as core network access (Core access) and mobility management for the terminal. A specific function of the AMF may be similar to a function of a mobility management entity (Mobility Management Entity, MME) in an LTE system.

In the embodiments of this application, a core network network slice identifier may be an identifier allocated to a network slice on a core network side. In the embodiments of this application, the core network network identifier may be referred to as a core network part slice identifier (Core part slice Identification, CSID), and may include but is not limited to at least one of the following: a network slice identifier, single network slice selection assistance information (Single Network Slice Selection Assistance information, S-NSSAI), S-NSSAI group information, a temporary identifier (Temporary ID), and radio access network network slice selection assistance information (Radio Access Network Network Slice Selection Assistance information, R-NSSAI).

The network slice identifier may include but is not limited to at least one of the following: network slice type information, service type information, tenant (Tenant) information, user group information, slice group information, network slice instance information, and a dedicated core network (Dedicated Core Network, DCN) identifier.

Specific definitions of the foregoing terms are as follows:
The network slice type information is as follows: For example, the network slice type information may indicate a network slice type such as an enhanced mobile broadband service (enhanced Mobile BroadBand, eMBB), ultra-reliable low-latency communication (Ultra-Reliable Low Latency Communications, URLLC), or massive machine-type communications (massive Machine Type Communication, mMTC). Optionally, the network slice type information may alternatively indicate an end-to-end network slice type including a network slice type from a RAN to a CN, or may indicate a network slice type on a RAN side or a network slice type on a CN side.

The service type information is identifier information related to a specific service. For example, the service type information may indicate a feature of a service such as a video service, an internet of vehicles service, or a voice service, or information about a specific service.

The tenant information is used to indicate information about a client creating or renting the network slice, for example, Tencent or the State Grid Corporation of China.

The user group information is used to indicate group information of grouping users based on a feature such as a user level.

The slice group information is used to indicate group information of grouping network slices based on a feature. For example, all network slices accessible by a terminal device may be used as one slice group, or network slices may be grouped according to another standard.

The network slice instance information is used to indicate an instance identifier and feature information that are created for the network slice. For example, an identifier may be allocated to a network slice instance to indicate the network slice instance, or a new identifier may be mapped based on an identifier of a network slice instance for association with the network slice instance, and a receiving party can identify, based on the identifier, the specific network slice instance indicated by the identifier.

The dedicated core network identifier is as follows: The identifier is used to uniquely indicate a dedicated core network in an LTE system, an eLTE system, or a 5G system, for example, a dedicated core network in the internet of things. Optionally, the dedicated core network identifier may be mapped to a network slice identifier. The network slice identifier may be obtained through mapping by using the dedicated core network identifier, and the dedicated core network identifier may be obtained through mapping by using the network slice identifier.

The S-NSSAI is as follows: The S-NSSAI may include at least slice/service type (Slice/Service type, SST) information, and optionally, may further include slice differentiator (Slice Differentiator, SD) information. The SST information is used to indicate behavior of a network slice, for example, a feature and a service type of the network slice. The SD information is SST supplementary information, and if the SST points to a plurality of network slice implementations, the SD may correspond to a unique network slice instance.

The S-NSSAI group information is used to indicate identifier information of grouping S-NSSAI based on a feature. For example, all network slices accessible by a terminal device that are of a same AMF may be used as one S-NSSAI group.

The temporary identifier is as follows: The temporary identifier is allocated by an AMF to a terminal that has been registered on a CN side, and the temporary identifier may uniquely point to a specific AMF.

The R-NSSAI (RAN-NSSAI) indicates a group of specific S-NSSAI, in other words, is an identifier of a set including a group of specific S-NSSAI.

It should be understood that, in the embodiments of this application, the CSID may be represented by using at least one of the foregoing parameters. For example, the CSID may be represented by the network slice type, may be represented by the network slice type and the service type, or may be represented by the service type and the tenant information. This is not limited in the embodiments of this application. How to represent the CSID is not described in detail below. Optionally, a specific coding form of the CSID is not limited. Different fields that can be carried in a message on an interface between different devices respectively represent different CSID indication information. Alternatively, an abstracted index value may be used for replacement, and different index values respectively correspond to different network slices. Certainly, in addition to the foregoing identifier, another identifier may be further used. This is not limited herein. It should be understood that if a terminal, an access network device, or a core network device supports a plurality of network slices, information about the network slices supported by the terminal, the access network device, or the core network device may be represented in a form of listing at least one of the foregoing identifiers.

Usually, a network slice performs a wireless network access process based on a network slice identifier allocated by a core network device. In the access process, there are a large quantity of network slice identifiers. Consequently, an access category or access class scale is extremely large, resulting in relatively high air interface overheads.

To help resolve the foregoing problem, a concept of a RAN network slice identifier is introduced in the embodiments of this application. The RAN network slice identifier may be a classification set of core network network slice identifiers (for example, S-NSSAI). RAN network slice identifiers may be aggregated into one or more sets according to a corresponding policy based on network slice identifiers provided by a core network. An identifier of each set may be referred to as a RAN network slice identifier. Operations such as random access control and core network device (for example, AMF) selection may be performed on a radio access network side based on the RAN network slice identifier. In a special case, the RAN network slice identifier may be in a one-to-one correspondence with a core network network slice identifier. For example, the core network network slice identifier may include S-NSSAI.

Optionally, the core network network slice identifier may indicate an end-to-end network slice, or may indicate a non-end-to-end network slice, for example, may indicate a network slice on a core network side. This is not limited in the embodiments of this application.

An access category (access category) or an access class (access class) generated at an existing non-access stratum (Non-access stratum, NAS) is a network slice identifier based on a core network, for example, S-NSSAI. Because there is a large quantity of S-NSSAI in a system, an entire access category or access class is very large. In addition, because there is the large quantity of S-NSSAI, a RAN side also needs to broadcast a large quantity of random access parameters (for example, access factors), resulting in relatively high air interface overheads. However, in the embodiments of this application, the RAN network slice identifier is used to perform a communication activity in a radio access network, and the RAN network slice identifier is used to classify and aggregate core network network slice identifiers, so that air interface overheads of the core network network slice identifiers can be reduced, and communication efficiency can be improved.

The foregoing access category/access class may refer to a mapping relationship. For example, a network side maps a terminal to a specific access category or access class based on aspects such as a type, an application, and an access level of the terminal. The access category/access class is used for access control. A base station notifies the terminal of the access category/access class to which the terminal belongs, and broadcasts an access parameter corresponding to the access category/access class. The terminal performs access check based on the access category/access class of the terminal and the received access parameter that corresponds to the access category/access class and that is broadcast by a RAN. In some cases, the access category/access class may be allocated by a core network. In the embodiments of this application, a RAN may perform access control by broadcasting a RAN network slice identifier and an access parameter corresponding to the RAN network slice identifier, or a RAN may generate an access stratum (access stratum, AS) access category/access class to perform access control. There is a mapping relationship between the AS access category/access class and the RAN network slice identifier. In the embodiments of this application, a radio access control process may be performed based on both the access category and the access class, or a radio access control process may be performed based on either of the access category and the access class.

Usually, a core network network slice identifier directly correlates with a network slice, but a RAN network slice identifier may not directly correlate with the network slice. Direct correlation may mean that a network slice identifier that is allocated by a core network and carried in a terminal device may directly correspond to a network slice to which the terminal device belongs. Therefore, when communication is performed in the radio access network by using the RAN network slice identifier, a possibility that the core network network slice identifier directly associated with the network slice is exposed in air interface transmission can be reduced, so that security of the air interface transmission is improved.

Optionally, a valid range of the RAN network slice identifier is not specifically limited in the embodiments of this application. For example, the RAN network slice identifier may be valid in a tracking area (tracking area, TA). To be specific, a same correspondence between a RAN network slice identifier and a core network network slice identifier is used in all cells in the TA. Certainly, the RAN network slice identifier may be valid in a plurality of TAs, or may be valid in a registration area (registration area, RA), or may be valid in some cells, for example, may be valid in a range of a RAN-based notification area (RAN-based Notification Area, RNA). Alternatively, the RAN network slice identifier may have a larger valid range.

Optionally, an aggregation policy between the RAN network slice identifier and the core network network slice is not specifically limited in the embodiments of this application. For example, based on a network slice-specific requirement, a plurality of core network network slice identifiers grouped as a same RAN network slice identifier may share a time-frequency resource on a RAN side. For example, network slices corresponding to core network network slice identifiers having a same RAN network slice identifier may share an air interface time-frequency resource on the RAN side, or share a physical random access channel (Physical Random Access Channel, PRACH) resource or the like, or aggregation may be performed based on quality of service (Quality of Service, QoS) requirements of the network slices corresponding to the core network network slice identifiers. For example, core network network slice identifiers corresponding to network slices having similar QoS requirements may have a same RAN network slice identifier. For example, network slices corresponding to network slice identifiers that are provided by a core network and that correspond to a same RAN-side network slice identifier may share an air interface resource or a layer 2 (including a MAC layer, an RLC layer, a PDCP layer, and an SDAP layer) resource on the RAN side, or use a same layer 2 configuration. The RAN-side network slice identifier may also indicate a RAN-side network slice instance (RAN slice instance). The layer 2 may include at least one of the following layers: a media access control (Media Access Control, MAC) layer, a radio link (Radio Link Control, RLC) layer, a packet data convergence protocol (Packet Data Convergence Protocol, PDCP) layer, and a service data adaptation protocol (Service Data Adaptation Protocol, SDAP) layer.

Optionally, the aggregation policy between the RAN network slice identifier and the core network network slice identifier may be generated by a network manager and notified by the network manager to a RAN device, that is, may be configured by using an operation, administration, and maintenance (Operation Administration and Maintenance, OAM) unit, or may be generated by the RAN device, or may be generated by RAN devices through interaction. For example, a plurality of RAN devices that share the aggregation policy between the RAN network slice identifier and the core network network slice identifier negotiate the aggregation policy through interaction by using an interface (for example, an Xn interface) between the RAN devices or through transit interaction by using an AMF.

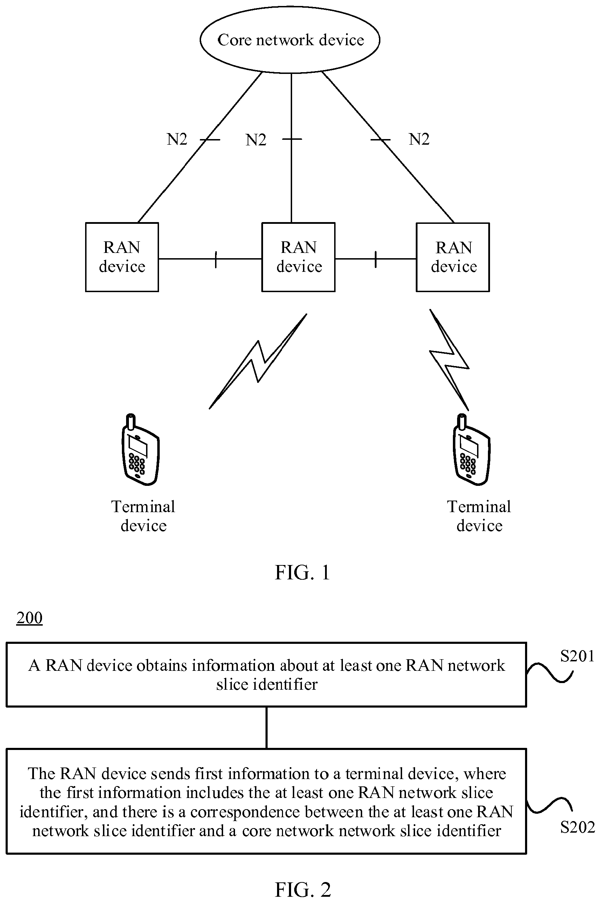

The following first describes a possible application environment of an embodiment of this application with reference to FIG. 1. As shown in FIG. 1, the application environment includes a RAN device, a core network device, and a terminal device. An interface between the RAN device and the core network device may be an N2 interface, and the terminal device may access a network by using the RAN device. The core network device may include, for example, an AMF or another network function having an AMF function. The RAN device may include various types of base stations, for example, may be a gNB in 5G.

Optionally, the application environment in FIG. 1 is merely an architectural diagram for reference, and may change at any time in subsequent technology evolution. A person skilled in the art can understand that a communication method in the embodiments of this application is also applicable to another similar communications architecture.

Optionally, in the application environment in FIG. 1, on a core network side, different network slices may have a shared access and mobility management function, in other words, share an AMF. On the core network side, in addition to sharing a control plane, different network slices may further have unique control plane functions and/or data plane functions, for example, session management functions. On a RAN side, a single RAN device may support different network slices. Specifically, there may be, for example, two manners for supporting different RANs. One manner is that all network slices share a resource. The other manner is that all network slices are isolated on resources. From a perspective of a user side, one terminal device may access a plurality of network slices, but one terminal device may usually access one AMF. In other words, a terminal device may be connected to a plurality of network slices, but the plurality of network slices are connected to a same AMF. To be specific, a user may set up a plurality of sessions on a plurality of network slice instances, but have only one access and mobility management function.

FIG. 2 is a schematic diagram of a communication method 200 according to an embodiment of this application. As shown in FIG. 2, the communication method 200 includes the following steps.

S201. A RAN device obtains information about at least one RAN network slice identifier.

Optionally, the at least one RAN network slice identifier may include a RAN network slice identifier supported by the RAN device. In other words, a network slice corresponding to the at least one RAN network slice identifier may include a network slice supported by the RAN device.

Optionally, the at least one RAN network slice identifier may be an identifier of a network slice used in a radio access network. Optionally, each RAN network slice identifier may correspond to one or more core network network slice identifiers.

Optionally, the RAN network slice identifier may be generated by using an operation, administration, and maintenance (Operation Administration and Maintenance, OAM) and allocated to the radio access network, for example, may be generated by a network manager and allocated to the radio access network, or may be generated by RAN devices through interaction and negotiation. Alternatively, the RAN network slice identifier may be generated by the RAN device. In a specific example, the network manager may be another network function module having an OAM function. The OAM mainly completes routine analysis, prediction, planning, and configuration work in a network and a service, and performs routine operation activities on the network and the service in the network, such as testing and fault management. In some examples, that a RAN device obtains information about at least one RAN network slice identifier may include: receiving, by the RAN, the information about the at least one RAN network slice identifier from the network manager. Alternatively, the RAN device may obtain the information about the RAN network slice identifier from the network manager or in another manner, and store the information about the RAN network slice identifier. In some examples, that a RAN device obtains information about at least one RAN network slice identifier may include: obtaining, by the RAN device, the information about the at least one RAN slice identifier from a local storage device.

There is a correspondence between the RAN network slice identifier and a core network network slice identifier. One RAN network slice identifier may correspond to one or more core network network slice identifiers. Alternatively, the RAN network slice identifier may be understood as classification and aggregation performed by the radio access network for the core network network slice identifiers.

Optionally, the information about the at least one RAN network slice identifier may be used to indicate the at least one RAN network slice identifier corresponding to a network slice supported by the RAN device. For example, the information about the at least one RAN network slice identifier may include the at least one RAN network slice identifier. For example, the following Table 1 is a schematic diagram of a correspondence between a RAN network slice identifier and a core network network slice identifier. For example, a RAN network slice identifier 0 may correspond to core network network slice identifiers 1, 2, 3, and 4. A RAN network slice identifier 1 may correspond to core network network slice identifiers 5, 6, 7, and 8. A RAN network slice identifier 2 may correspond to core network network slice identifiers 9, 10, 11, and 12. It can be learned that each core network network slice identifier may correspond to one network slice, and each RAN network slice identifier may correspond to one or more network slices. In other words, the core network network slice identifiers may be classified and aggregated based on the RAN network slice identifier. For example, network slices corresponding to network slice identifiers provided by a core network share an air interface resource or a layer 2 function configuration on a RAN side, so that information content in the radio access network can be simplified by using the RAN network slice identifier, so as to improve communication efficiency.

**Table 1**

| RAN network slice identifier (RSID) | Core network network slice identifier (CSID) |
|---|---|
| 0 | 1, 2, 3, 4 |
| 1 | 5, 6, 7, 8 |
| 2 | 9, 10, 11, 12 |

It should be noted that, in Table 1, core network network slice identifiers corresponding to different RAN network slice identifiers have no intersection. However, this is merely an example. Actually, core network network slice identifiers corresponding to different RAN network slice identifiers may alternatively have an intersection. For example, the RSID 1 may correspond to the CSID 1, the CSID 2, and the CSID 3, and the RSID 2 may correspond to the CSID 3, the CSID 4, and the CSID 5. It can be learned that the CSID 3 is a part shared by the RSID 1 and the RSID 2.

Further, the information about the at least one RAN network slice identifier may further include information indicating the correspondence between the at least one RAN network slice identifier and the core network network slice identifier.

Optionally, the RAN network slice identifier may include an RSID. Alternatively, the RAN network slice identifier may include another type of identifier allocated by a device in the radio access network to a network slice. This is not limited in this embodiment of this application.

In an example, the information about the at least one RAN network slice identifier may include RSID configuration information. The RSID configuration information may be only one RSID and include no mapping relationship list between the RSID and a CSID, may be a plurality of RSIDs, may be one RSID and include a mapping relationship list between the RSID and a CSID, or may be a plurality of RSIDs and include a mapping relationship list between each RSID and a CSID.

S202. The RAN device sends first information to a terminal device, where the first information includes the at least one RAN network slice identifier, and there is a correspondence between the at least one RAN network slice identifier and a core network network slice identifier.

One RAN network slice identifier may correspond to one or more core network network slice identifiers. Alternatively, the RAN network slice identifier may be understood as classification and aggregation performed by the radio access network for the core network network slice identifiers.

Optionally, the first information may be carried in a radio resource control (Radio Resource Control, RRC) message or a broadcast message. In other words, the RRC message or the broadcast message sent by the RAN device may include the first information. It should be understood that a specific manner of the first information is not limited, and the first information may be transmitted as an access stratum (access stratum) parameter, or may be transmitted as a non-access stratum (Non access stratum) parameter.

In some examples, the RRC message may include but is not limited to at least one of the following: an RRC connection setup message (RRC Connection Setup message), an RRC connection reconfiguration message (RRC Connection Reconfiguration message), an RRC connection reject message (RRC Connection Reject message), an RRC connection resume message (RRC Connection Resume message), an RRC connection release message (RRC Connection Release message), and an RRC connection suspend message (RRC Connection Suspend message).

Optionally, the terminal device may pre-store information about a correspondence between a RAN network slice identifier and a core network network slice identifier. When the first information indicates the at least one RAN network slice identifier, the terminal device may determine, based on the pre-stored information about the correspondence, the core network network slice identifier corresponding to the at least one RAN network slice identifier.

Optionally, the first information may further include information used to indicate the correspondence between the at least one RAN network slice identifier and the core network network slice identifier.

Optionally, in the radio access network, the RAN network slice identifier may be used to perform a communication activity in the radio access network. For example, the communication activity may include at least one of performing access control based on the RAN network slice identifier, setting up an RRC connection based on the RAN network slice identifier, or selecting a core network device based on the RAN network slice identifier during routing. The access control may include access barring check (Access Barring Check). Specifically, different access barring parameters may be set for different RAN network slice identifiers, so as to implement service-specific access control. For example, the access barring parameter may include an access factor.

In this embodiment of this application, in communication in the radio access network, the RAN network slice identifier is used to classify network slices. There is the correspondence between a RAN network slice identifier and a core network network slice identifier, so that a RAN network slice identifier may be allocated for communication based on a requirement of the radio access network, and therefore communication efficiency of the radio access network can be improved.

In this embodiment of this application, the RAN network slice identifier is used to perform the communication activity in the radio access network, and the RAN network slice identifier is used to classify and aggregate core network network slice identifiers, so that air interface overheads of the core network network slice identifiers can be reduced, and communication efficiency can be improved.

For example, the RAN device may broadcast different RAN network slice identifiers and access barring parameters corresponding to the different RAN network slice identifiers, instead of broadcasting different core network network slice identifiers and access barring parameters corresponding to the different core network network slice identifiers, to perform access control on the terminal, so as to reduce broadcast content, reduce air interface overheads, and improve communication efficiency.

If communication is performed in the radio access network by using a core network network slice identifier, as direct association information of a network slice, the core network network slice identifier may be exposed in an air interface message on which security protection is not performed, resulting in an air interface security problem. For example, if no security protection is performed after an RRC connection is set up, and there is no direct correspondence between a RAN network slice identifier carried in an RRC connection setup message and a network slice, a network slice corresponding to the RAN network slice identifier can be determined only by using a correspondence table that is between a network slice identifier and a network slice and that is stored on a radio access network side or a UE side. When the RAN network slice identifier is used to perform the communication activity in the radio access network, there is no need to worry about a security problem during air interface transmission. Optionally, when the first information sent by the RAN device includes the information indicating the correspondence between a RAN network slice identifier and a core network network slice identifier, or when the information that is about the at least one RAN network slice identifier and that is obtained by the RAN device from the network manager includes the information indicating the correspondence between a RAN network slice identifier and a core network network slice identifier, the first information may be transmitted in an encryption manner.

In this embodiment of this application, because the RAN network slice identifier instead of the core network network slice identifier is used in the radio access network to perform the communication activity in the radio access network, a possibility that the core network network slice identifier directly associated with the network slice is exposed in air interface transmission is reduced, so that security of the air interface transmission is improved.

In some examples, a network slice corresponding to the at least one RAN network slice identifier sent by the RAN device includes a network slice allowed to be accessed by the terminal device. A network slice accessed by the terminal device is a network slice allowed to be accessed by the terminal in a registration area (registration area, RA) or a tracking area (tracking area, TA) to which the terminal belongs, for example, may be identified by using allowed (allowed) S-NSSAI, an allowed (allowed) S-NSSAI list, or allowed (allowed) NSSAI. Alternatively, the first information may indicate, to the terminal device by using the RAN network slice identifier, the network slice allowed to be accessed by the terminal device. In this case, the first information may be sent in a network access and registration process, a session setup process, or a TA/RA update process of the terminal device.

In some examples, the RAN device may first obtain, from a core network device (for example, an AMF), a list of network slices corresponding to the terminal device that are currently allowed to be accessed. The core network device may indicate, to the RAN device by using the RAN network slice identifier or the core network network slice identifier, the network slices allowed to be accessed by the terminal device in a current network. Alternatively, the core network device may perform indication by using another identifier indicating the network slices. Then, the RAN device may determine and send, based on a core network network slice list corresponding to the network slices allowed to be accessed by the terminal device, the at least one RAN network slice identifier corresponding to the network slices allowed to be accessed by the terminal device. Optionally, if the terminal device supports a plurality of RSIDs or CSIDs, the RAN device may indicate, to the terminal device in a list form, the network slices allowed to be accessed.

It should be understood that the network slices allowed to be accessed by the terminal device may change with a network status, for example, may change based on a time or a location of the terminal. Therefore, the RAN device can flexibly send the first information based on a network status change.

In some examples, the method 200 further includes: receiving, by the RAN device, information about a slice allowed to be accessed from the core network device, where the information about the slice allowed to be accessed is used to indicate the network slice allowed to be accessed by the terminal device. For example, the RAN device may obtain, by using an interface between the RAN device and an AMF, the information about the slice allowed to be accessed. The information about the slice allowed to be accessed may indicate, by using a RAN network slice identifier, the network slice allowed to be accessed by the terminal device, or may indicate, by using a core network network slice identifier, the network slice allowed to be accessed by the terminal device. For example, the information about the slice allowed to be accessed may include allowed (allowed) S-NSSAI, allowed (allowed) NSSAI, an allowed (allowed) S-NSSAI list, or an allowed (allowed) NSSAI list.

Optionally, in some examples, the method 200 further includes: sending, by the RAN device, second information to the core network device, where the second information is used to indicate the correspondence between the at least one RAN network slice identifier and the core network network slice identifier. For example, the RAN device may send the second information by using an interface between the RAN device and the core network device. The second information may be carried in an interface setup request message, so that when reconfiguring an access class/access category table, the core network device replaces, with a RAN network slice identifier based on the correspondence that is between the RAN network slice identifier and the core network network slice identifier and that is indicated by the second information, a core network network slice identifier used on a NAS side. Because core network network slice identifiers can be classified and aggregated based on a RAN network slice identifier, the access class/category table on a core network device side can be simplified. For example, when the core network device sends the access class/category table to the terminal device by using NAS signaling, the RAN network slice identifier may be used to indicate an access class/category, so that a communication information amount can be reduced, overheads can be reduced, and communication efficiency can be improved. For example, Table 2 shows that a RAN network slice identifier is used to indicate an access class/category, and an RSID 3 corresponds to S-NSSAI 8 and S-NSSAI 9. Table 3 shows that a core network network slice identifier is used to indicate an access class/category. It can be learned from Table 2 and Table 3 that an access class/category table generated by using RAN network slice identifiers is more simplified, so that content of signaling for an access class/category can be simplified. It should be noted that Table 2 and Table 3 show a case in which both an access class and an access category exist. In actual application, an access control process may be alternatively performed based on any one of the access class and the access category. In other words, parameters in Table 2 or Table 3 may include either of the access category and the access class, or may include both the access class and the access category.

**Table 2**

| Access category | RAN network slice identifier | Application | Service/Event type | ... | Access class |
|---|---|---|---|---|---|
| 1 | RSID 1 | | | | 3 |
| | RSID 3 | 3 | | | 5 |
| 10 | RSID 2 | | Emergency call | | 10 |
| | | | RAN signaling | | 2 |

**Table 3**

| Access category | Core network network slice identifier | Application | Service/Event type | ... | Access class |
|---|---|---|---|---|---|
| 1 | S-NSSAI = 7 | | | | 3 |
| | S-NSSAI = 8 | 3 | | | 5 |
| | S-NSSAI = 9 | 3 | | | 5 |
| 10 | | | Emergency call | | 10 |
| | | | RAN signaling | | 2 |

Optionally, in the method 200, the first information further includes access control information corresponding to the at least one RAN network slice identifier, and the access control information includes information for instructing the terminal device to access a radio access network. For example, the first information may be used by the terminal device to initiate a random access process.

For example, the access control information may be used to indicate an access control parameter corresponding to the RAN network slice identifier. The access control parameter may include an access factor (access factor). Access factors corresponding to different RAN network slice identifiers may be the same or may be different. The terminal device may initiate a random access process based on the access factor. Alternatively, the access control information may indicate that a specific RAN network slice identifier is not barred by access control. That a specific RAN network slice identifier is not barred by access control means that when the terminal device initiates a service corresponding to a specific RAN network slice identifier, the terminal device may initiate a random access process without performing random access check.

It should be understood that, in another example, the RAN device may alternatively broadcast another parameter (for example, a parameter value corresponding to an access class/access category table) and an access factor corresponding to the parameter, and there is a correspondence between the parameter and an RSID. In addition, the RAN-side device notifies the terminal device of the parameter and the correspondence between the parameter and the RSID. When performing random access, the terminal device may perform random access based on the broadcast parameter and the stored correspondence between the parameter and the RSID.

Optionally, the access control information may include an access factor (access factor). For example, the access factor may include an access control barring parameter (access control barring parameter) or a barring parameter for application-specific congestion control used for data communication (application specific congestion control used for data communication barring parameter).

Optionally, the access factor is determined based on an access class or an access category corresponding to the at least one RAN network slice identifier. For example, access factors corresponding to a same access class or access category may be the same. The RAN device may determine, based on an access class or an access category to which the RAN network slice identifier belongs, the access class or the access category corresponding to the RAN network slice identifier.

In the method 200, after starting the random access process, the terminal may further perform another step in the access control process based on the RAN network slice identifier. For example, an RRC connection may be further set up based on the RAN network slice identifier. Alternatively, a routing path may be further selected based on the RAN network slice identifier.

In an example, that the RRC connection is set up based on the RAN network slice identifier is used as an example. The method 200 further includes: receiving, by the RAN device, an RRC connection request message from the terminal device, where the RRC connection request message includes a first RAN network slice identifier corresponding to a network slice that the terminal device requests to access; and sending, by the RAN device, an RRC connection response message to the terminal device based on the first RAN network slice identifier.

The terminal device may determine the corresponding network slice based on an initiated service, to determine the first RAN network slice identifier, and send the RRC connection request message. The RRC connection response message may include an RRC connection setup message, an RRC connection reject message, or an RRC connection suspend message. The RAN device may determine, based on the first RAN network slice identifier, whether to set up an RRC connection to the terminal device. When determining to set up the RRC connection, the RAN device may send the RRC connection setup message to the terminal device. When determining not to set up the RRC connection, the RAN device may send the RRC connection reject message or the RRC connection suspend message to the terminal device.

In some examples, the sending, by the RAN device, an RRC connection response message to the terminal device based on the first RAN network slice identifier may include: determining, by the RAN device based on priority information of the first RAN network slice identifier and/or a size of an idle resource corresponding to the first RAN network slice identifier, whether to set up the RRC connection to the terminal device.

In an example in which whether to set up the RRC connection is determined based on the priority information of the first RAN network slice identifier, the sending, by the RAN device, an RRC connection response message to the terminal device based on the first RAN network slice identifier includes: sending, by the RAN device, the RRC connection setup message to the terminal device when the priority information corresponding to the first RAN network slice identifier meets a predetermined rule, where for example, when a priority corresponding to the first RAN network slice identifier is a highest priority, even if a current network is in a congested state, the RAN device sends the RRC connection setup message to the terminal device; or sending, by the RAN device, the RRC connection reject message to the terminal device when the priority information corresponding to the second RAN network slice identifier does not meet a predetermined rule, where for example, when a priority corresponding to the first RAN network slice identifier is a lowest priority, if a current network is in a congested state, the RAN device sends the RRC connection reject message to the terminal device.

In an example in which whether to set up the RRC connection is determined based on the size of the idle resource corresponding to the first RAN network slice identifier, the sending, by the RAN device, an RRC connection response message to the terminal device based on the first RAN network slice identifier includes: sending, by the RAN device, the RRC connection setup message to the terminal device when an idle network resource of the network slice corresponding to the first RAN network slice identifier is greater than or equal to a preset threshold; or sending, by the RAN device, the RRC connection reject message to the terminal device when an idle network resource of the network slice corresponding to the first RAN network slice identifier is less than a preset threshold.

In this embodiment of this application, the RAN device may determine, based on the identifier of the RAN network slice that the terminal device requests to access, whether to set up the RRC connection to the terminal device, so that a service can be flexibly provided when a network is congested, for example, a service is preferentially provided for a high-priority service, and therefore communication efficiency can be improved.

Optionally, in the method 200, that the routing path is selected based on the RAN network slice identifier is used as an example. The method 200 further includes: receiving, by the RAN device, third information from the terminal device, where the third information includes a first RAN network slice identifier corresponding to a network slice that the terminal device requests to access; and determining, by the RAN device based on the first RAN network slice identifier, a core network device that needs to be accessed by the terminal device. For example, if RAN network slice identifiers correspond to core network devices corresponding to different core network network slice identifiers, the RAN network slice identifiers may indicate the corresponding core network devices.

The core network device may include an AMF.

Optionally, the third information may be carried in a radio resource control RRC connection complete message. For example, after receiving the RRC setup message sent by the RAN device, the terminal device sends the RRC connection complete message to the RAN device, and adds the first RAN network slice identifier to the RRC connection complete message, so that the RAN device determines the core network device that needs to be accessed by the terminal device. Certainly, the third information may be alternatively carried in another type of message, for example, an RRC message such as an RRC connection resume completion message.

In this embodiment of this application, the RAN device may select, based on the RAN network slice identifier, the core network device that needs to be accessed on the routing path, so that communication connection setup efficiency is improved.

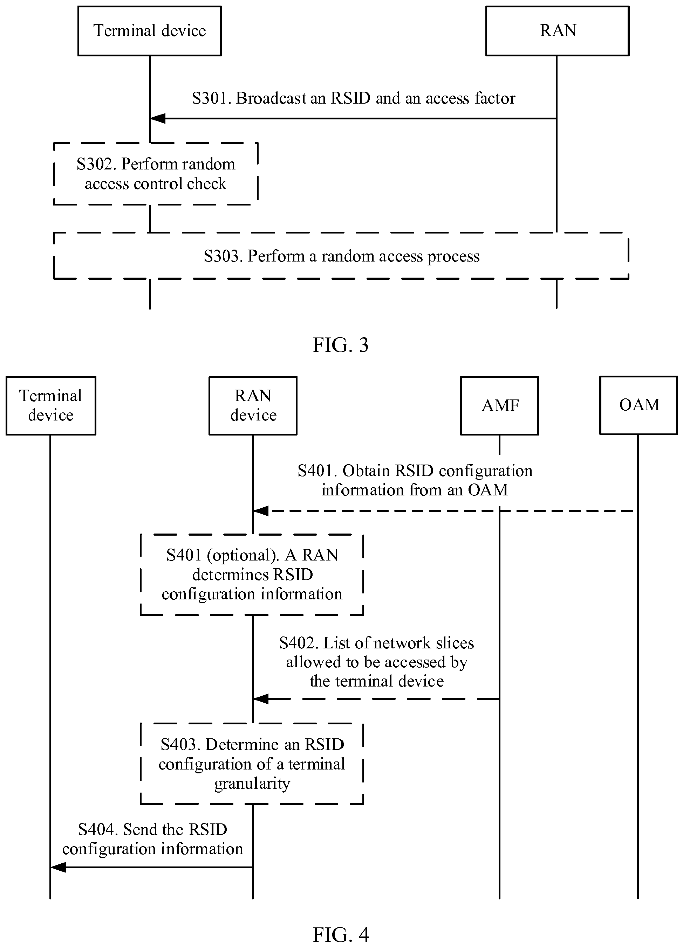

In a specific example, FIG. 3 is a schematic flowchart of a communication method 300. The method 300 describes a process of performing random access based on a RAN network slice identifier. The method 300 includes the following steps.

S301. ARAN device broadcasts, to a terminal device, an RSID and an access factor corresponding to the RSID.

Access factors corresponding to different RSIDs may be the same or may be different. For example, an access factor corresponding to an RSID 1 may be 0.3, and an access factor corresponding to an RSID 2 may be 0.5. Alternatively, both access factors corresponding to an RSID 1 and an RSID 2 may be 0.5. Alternatively, it may be indicated that a specific RSID is not barred by access control. For example, an RSID 3 may not be barred by access control. If the terminal device needs to initiate a service corresponding to the RSID 3, the terminal device may initiate a random access process without performing random access check.

Referring to Table 3, each terminal device is configured as an access class or an access category on a core network side. For example, when a RAN network slice identifier allocated to the terminal device is an RSID 1, an access class corresponding to the terminal device is 3, and an access category is 1. The access class or the access category to which the terminal device belongs may be notified by a core network device to the terminal device by using NAS signaling.

In another example, the RAN device may broadcast an access category and an access factor corresponding to the access category. Then, during random access control check, the terminal device may first determine specific S-NSSAI to which an accessed service belongs, then determine an RSID corresponding to the S-NSSAI, subsequently determine a first access category corresponding to the RSID, and finally perform access control check based on the first access category and a broadcast access factor corresponding to the first access category.

S302. The terminal device performs random access control check based on an RSID to which a service or signaling to be currently initiated belongs, and initiates a random access process in S303 if random access can be performed, or may wait for a next determining result if random access cannot be performed. Certainly, if it is indicated in S301 that a specific RSID is not barred by access control, the terminal device may directly perform the random access process in S303 without performing S302.

For example, after receiving the access factor that corresponds to the RSID and that is broadcast by the RAN device, the terminal device may generate a random number in an interval [0, 1]. If the random number is less than the access factor broadcast by the RAN device, it is considered that the access attempt succeeds. If the random number is not less than the access factor broadcast by the RAN device, it is considered that the access attempt of the terminal device fails, and the terminal device re-generates a random number in [0, 1], and attempts random access again.

S303. The terminal device performs the random access process.

In this embodiment of this application, the terminal device may be instructed, based on the RAN network slice identifier, to perform the random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

It should be understood that, in another example, the RAN-side device may alternatively broadcast another parameter (for example, a parameter value corresponding to an access class/access category table) and an access factor corresponding to the parameter, and there is a correspondence between the parameter and an RSID. In addition, the RAN-side device notifies the terminal device of the parameter and the correspondence between the parameter and the RSID. When performing random access, the terminal device may perform random access based on the broadcast parameter and the stored correspondence between the parameter and the RSID. It should be understood that, if a network side configures access categories for the terminal at both a NAS stratum and an AS stratum, and the RAN broadcasts a NAS stratum access category, an AS stratum access category, and access parameters corresponding to the NAS stratum access category and the AS stratum access category, the terminal first performs random access check at the NAS stratum, then performs random access check at the AS stratum after the random access check at the NAS stratum succeeds, and initiates the random access process after random access check on both the NAS stratum and the AS stratum succeeds. If a network side configures an access category for the terminal at a NAS stratum or an AS stratum, and the RAN broadcasts the NAS stratum or AS stratum access category and an access parameter corresponding to the NAS stratum or AS stratum access category, the terminal needs only to perform random access check at the NAS stratum or the AS stratum, and may initiate the random access process after the random access check succeeds.

In a specific example, FIG. 4 shows a specific example of a communication method 400 according to an embodiment of this application. FIG. 4 shows a process in which a RAN device sends first information to a terminal device. ARAN network slice identifier may include an RSID, and a core network network identifier may include S-NSSAI. A core network device may include an AMF. As shown in FIG. 4, the method 400 includes the following steps.

S401. The RAN device obtains RSID configuration information, where the RSID configuration information includes an identifier of an RSID corresponding to a network slice supported by a current radio access network.

It should be noted that, the information about the at least one RSID identifier in the method 200 may include the foregoing RSID configuration information.

Optionally, the RSID configuration information may further include a correspondence between an RSID and a core network network slice identifier.

Optionally, the RAN device may obtain the RSID configuration information from an OAM, or may obtain the RSID configuration information by interacting with another RAN device. Alternatively, the RAN device may autonomously generate the RSID information.

S402. In an optional step, an AMF may notify, by using an N2 interface message, the RAN device of a list of network slices currently allowed to be accessed by the terminal device. The N2 interface may be a control plane interface between the core network device and an access network device.

For example, the core network device may indicate, to the RAN device by using the RAN network slice identifier or the core network network slice identifier, the network slices allowed to be accessed by the terminal device in the current radio access network. Alternatively, the core network device may perform indication by using another identifier indicating the network slices. For example, the core network device may notify the RAN device in a form of an S-NSSAI list. The information may be sent in a network access and registration process, a session setup process, or a TA/RA update process of the terminal device.

S403. In an optional step, the RAN device may determine the RSID configuration information of a terminal granularity based on the list that is notified by the AMF and that is of the network slices allowed to be currently accessed by the terminal device. The RSID configuration information may be only one RSID and include no mapping relationship list between the RSID and a CSID, may be a plurality of RSIDs, may be one RSID and include a mapping relationship list between the RSID and a CSID, or may be a plurality of RSIDs and include a mapping relationship list between the RSIDs and CSIDs. For example, the following Table 4 shows an RSID configuration on a RAN side, and the following Table 5 and Table 6 show RSID configurations respectively corresponding to a first terminal device and a second terminal device. The RAN device extracts an RSID configuration on the RAN side based on lists of network slices currently allowed to be accessed by different terminal devices, to obtain an RSID configuration of the terminal granularity.

**Table 4 RAN-side mapping relationship table**

| RAN network slice identifier (RSID) | Core network network slice identifier (S-NSSAI) |
|---|---|
| 0 | 1, 2, 3, 4 |
| 1 | 5, 6, 7, 8 |
| 2 | 9, 10, 11, 12 |
| 3 | 13, 14, 15, 16 |
| 4 | 17, 18, 19, 20 |

**Table 5 Mapping relationship table of a first terminal device**

| RAN network slice identifier (RSID) | Core network network slice identifier (S-NSSAI) |
|---|---|
| 1 | 5, 6 |
| 2 | 9, 10, 11 |

**Table 6 Mapping relationship table corresponding to a second terminal device**

| RAN network slice identifier (RSID) | Core network network slice identifier (S-NSSAI) |
|---|---|
| 3 | 15 |
| 4 | 19 |

For example, as shown in Table 4, a RAN network slice identifier RSID 0 corresponds to core network network slice identifiers S-NSSAI 1, S-NSSAI 2, S-NSSAI 3, and S-NSSAI 4, a RAN network slice identifier RSID 1 corresponds to core network network slice identifiers S-NSSAI 5, S-NSSAI 6, S-NSSAI 7, and S-NSSAI 8, a RAN network slice identifier RSID 2 corresponds to core network network slice identifiers S-NSSAI 9, S-NSSAI 10, S-NSSAI 11, and S-NSSAI 12, a RAN network slice identifier RSID 3 corresponds to core network network slice identifiers S-NSSAI 13, S-NSSAI 614, S-NSSAI 15, and S-NSSAI 16, and a RAN network slice identifier RSID 4 corresponds to core network network slice identifiers S-NSSAI 17, S-NSSAI 18, S-NSSAI 19, and S-NSSAI 20. As shown in Table 5, core network network slice identifiers for network slices allowed to be accessed by the first terminal device are S-NSSAI 5, S-NSSAI 6, S-NSSAI 9, S-NSSAI 10, and S-NSSAI 11. Therefore, RAN network slice identifiers corresponding to the network slices allowed to be accessed by the first terminal device include the RSID 1 and the RSID 2. As shown in Table 6, core network network slice identifiers for network slices allowed to be accessed by the second terminal device are S-NSSAI 15 and S-NSSAI 19. Therefore, RAN network slice identifiers corresponding to the network slices allowed to be accessed by the second terminal device are the RSID 1 and the RSID 2.

S404. The RAN device sends the first information to the terminal device.

The first information may be carried in an RRC message or a broadcast message. It should be noted that, if S402 and S403 exist, the first information may be used to notify the terminal device of the RAN network slice identifier configuration information of the terminal granularity, namely, RAN network slice identifier configuration information extracted based on the network slices that can be currently accessed by the terminal device. If S403 and S404 do not exist, the first information may be used to notify the terminal device of all RAN network slice configuration information on the RAN network side. After receiving the first information, the terminal device may perform subsequent communication based on related information stored in the terminal device. For example, the terminal device may pre-store a mapping relationship between a RAN network slice identifier and a core network network slice identifier. In some examples, the first information may be but is not limited to being carried in at least one of the following RRC messages: an RRC connection setup message (RRC Connection Setup message), an RRC connection reconfiguration message (RRC Connection Reconfiguration message), an RRC connection reject message (RRC Connection Reject message), an RRC connection resume message (RRC Connection Resume message), an RRC connection release message (RRC Connection Release message), and an RRC connection suspend message (RRC Connection Suspend message).

In this embodiment of this application, in communication in the radio access network, the RAN network slice identifier is used to classify network slices. There is the correspondence between a RAN network slice identifier and a core network network slice identifier, so that a RAN network slice identifier may be allocated for communication based on a requirement of the radio access network, and therefore communication efficiency of the radio access network can be improved.

In this embodiment of this application, because the RAN network slice identifier instead of the core network network slice identifier is used in the radio access network to perform a communication activity in the radio access network, a possibility that the core network network slice identifier directly associated with the network slice is exposed in air interface transmission is reduced, so that security of the air interface transmission is improved.

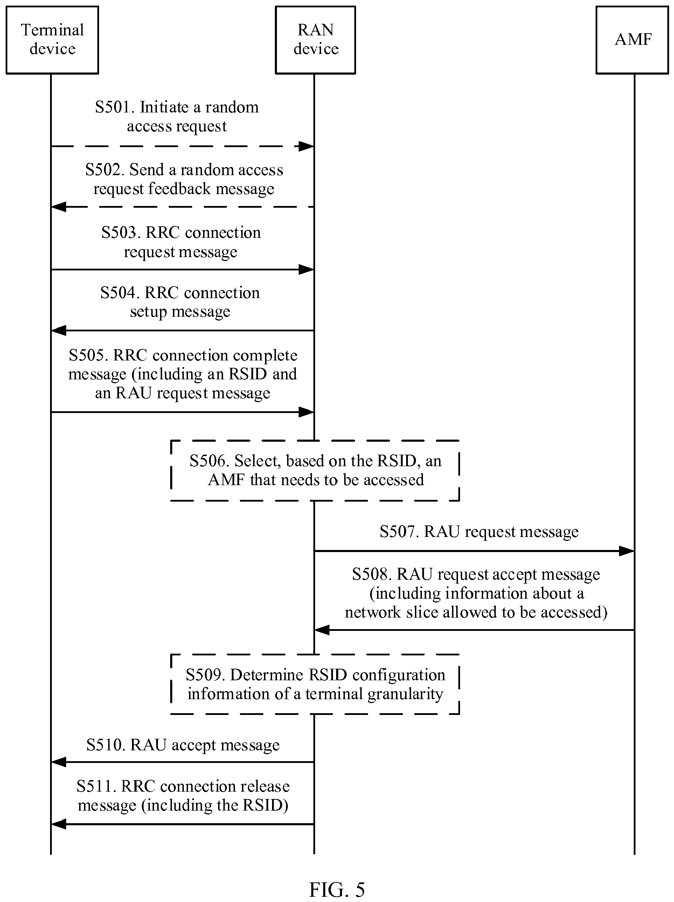

In a specific example, FIG. 5 describes a communication method 500 according to an embodiment of this application. An RA/TA update procedure of a terminal device in an idle state is used as an example in the method 500, to describe a specific procedure in which a RAN device communicates with the terminal device based on a RAN network slice identifier. S503 and S504 in the method 500 include a process in which the RAN device sets up an RRC connection based on the RAN network slice identifier, and S505 and S506 include a process of selecting, for the terminal device, a core network device that needs to be accessed. The first information in the method 200 may be carried in registration area identifier information in S510. The RAN network slice identifier may include an RSID. The method 500 includes the following steps.

S501. The terminal device selects a random sequence to initiate a random access request to the RAN device.

Optionally, for a process in which the terminal device initiates the random access request, refer to the related content in the method 200 or the method 300. Details are not described herein again.

S502. The RAN device sends a random access request feedback message to the terminal device, where the message may include a time-frequency resource allocated by the RAN device to the terminal device for sending a subsequent RRC message.

S503. The terminal device sends an RRC connection request message to the RAN device, where the RRC connection request message may carry reason indication information, and the reason indication information may indicate that a reason for setting up the RRC connection request message is to send signaling. Optionally, the RRC connection request message may carry an RSID.

S504. The RAN device determines, based on the RSID carried in the RRC connection request message, whether to set up an RRC connection. When determining to set up the RRC connection, the RAN device sends an RRC connection setup message to the terminal device. The RRC connection setup message may include configuration information of a signaling radio bearer, or may include configuration information of the RSID. The configuration information is the same as that in the previous embodiment. Details are not described herein again.

For an implementation process in which the RAN device determines, based on the RRC connection request message, whether to set up the RRC connection, refer to the related description in the method 200. Details are not described herein again.

S505. The terminal device sends an RRC connection complete message to the RAN device, where the RRC connection complete message may include first RAN network slice identifier information (for example, an RSID) corresponding to a network slice that the terminal device requests to access, so that the RAN device selects, for the terminal device, the core network device that needs to be accessed in S506. The RRC connection complete message may further include registration area update (Registration Area Update, RAU) request information.

S506. The terminal device selects, for the terminal device based on the first RAN network slice identifier included in the RRC connection complete message, the core network device that needs to be accessed, where the core network device may include, for example, an AMF.

For example, the RAN device may obtain information about specific network slices supported by the AMF and a correspondence between a RAN network slice identifier and a core network network slice identifier. In other words, the RAN device may select the AMF for the terminal based on S-NSSAI. If the RAN device obtains the first RAN network slice identifier, the RAN device may also determine S-NSSAI corresponding to the first RAN network slice identifier, so as to select the AMF based on the first RAN network slice identifier.

S507. The RAN device sends an RAU request message to the selected core network device, where the RAN request message may include an identifier of the terminal device.

S508. The core network device sends an RAU request reply message to the RAN device, where the RAU request reply message may carry information about a list of network slices currently allowed to be accessed by the terminal device, for example, may include a list of S-NSSAI allowed to be accessed.

Processes performed in S508 and S509 are similar to those performed in S402 and S403 in the method 400. For a specific implementation process of this part, refer to the foregoing related content.

S509. Optionally, the RAN device may determine RSID configuration information of a terminal granularity based on the list that is notified by the core network device and that is of the network slices currently allowed to be accessed by the terminal device, and RSID configuration information on a current RAN side. Specifically, the RAN device may extract an RSID configuration on the RAN side based on lists of network slices currently allowed to be accessed by different terminal devices, to obtain the RSID configuration of the terminal granularity. For a specific correspondence, refer to Table 3 to Table 5 above.

S510. The RAN device sends an RAU accept message to the terminal device, where the RAU accept message may include information about a new registration area identifier allocated by a core network to the terminal device. Optionally, when a RAN network slice identifier allocated to the terminal device in a radio access network changes, the registration area identifier information may further include information about a RAN network slice identifier reallocated by the core network device to the terminal. Optionally, the message may further include an access class/access category table of the core network device, and an access class/access category may be indicated by using a RAN network slice identifier in the access class/access category table of the core network device. A specific implementation of the access class and the access category is described in a next embodiment.

S511. If no service occurs within a preset time period, the RAN device may send an RRC connection release message to the terminal device, where the RRC connection release message may carry a RAN network slice identifier corresponding to a released network slice.

In this embodiment of this application, based on the RAN network slice identifier, the RAN device may perform random access control, set up the RRC connection, and select the core network device. Communication signaling content in the radio access network is simplified by introducing the RAN network slice identifier, and a probability that a core network network slice identifier appears is reduced, so that security of air interface transmission is improved.

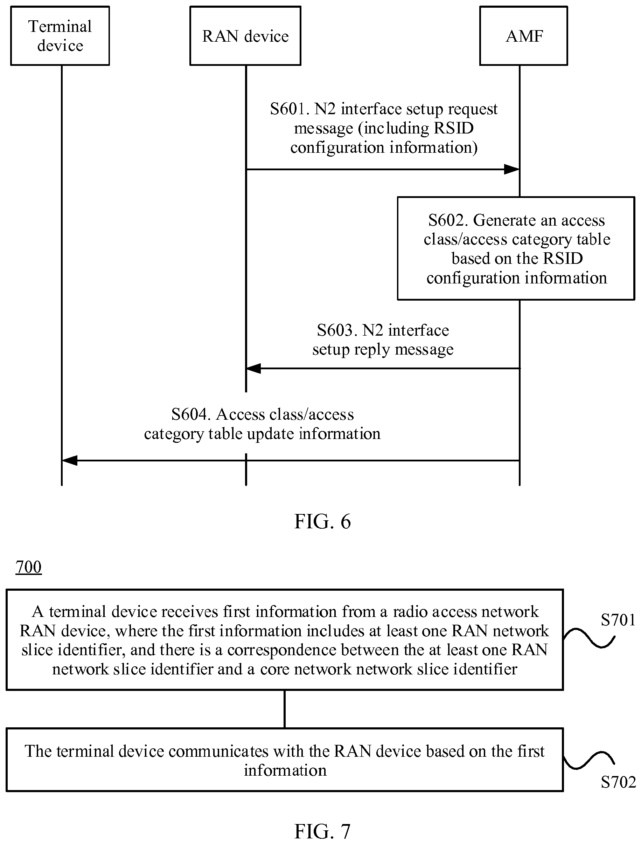

FIG. 6 is an interaction flowchart of a communication method 600 according to an embodiment of this application. The method 600 shows a process in which a core network device updates an access class/access category based on a correspondence that is between a RAN network slice identifier and a core network network slice identifier and that is sent by a RAN device. The method 600 may include the following steps.

S601. The RAN device sends a first interface setup request message or a RAN device configuration update message to the core network device.

The first interface setup request message or the RAN device configuration update message is used to notify the core network device of RSID configuration information on a RAN side. For example, the RSID configuration information may be used to indicate, based on an RSID, information about a network slice supported by the RAN device. Further, the RSID may include a correspondence between an RSID and a core network network slice identifier. Optionally, the first interface may be an interface between the RAN device and the core network device. In this embodiment of this application, the first interface may be referred to as an N2 interface.

S602. The core network device may re-update an access class/access category list based on the RSID configuration information obtained in S601, and may replace core network network identifier information in the access class/access category list with the RSID.

Specifically, for a process of simplifying the access class/access category list by the core network device, refer to the related description in the method 200 and the content in Table 2 and Table 3. Details are not described herein.

S603. The core network device sends the first interface setup request message or a RAN device configuration update acknowledgment message to the RAN device, where the first interface setup request message or the RAN device configuration update acknowledgment message may include information about a network slice supported by the core network device. The information about the network slice may be indicated by using an RSID.

S604. Optionally, the core network device may send an access class/access category table update message to the terminal device, where the access class/access category table update message may include an updated access class/access category table, and an access class/access category may be indicated by using a RAN network slice identifier in the updated access class/access category table. Optionally, the access class/access category table update message may be located in NAS stratum signaling. It should be understood that, this step and the foregoing steps have no necessary causal relationship and sequence relationship, and the message may be an independent message, for example, a TAIRA update success message.

It should be noted that, in FIG. 6, the first interface setup request message (N2 interface setup request message) is used as an example to describe the method 600, and the first interface setup request message may be replaced with the RAN device configuration update message. The first interface setup reply message may be replaced with the RAN device configuration acknowledgment message.

In this embodiment of this application, the RAN device notifies the core network device of a RAN network slice identifier of the network slice supported by the RAN device, so that the core network device simplifies the NAS access class/access category list, to reduce air interface overheads.

FIG. 7 is a schematic flowchart of a communication method 700 according to an embodiment of this application. As shown in FIG. 7, the method 700 includes the following steps.

S701. A terminal device receives first information from a radio access network RAN device, where the first information includes at least one RAN network slice identifier, and there is a correspondence between the at least one RAN network slice identifier and a core network network slice identifier.

S702. The terminal device communicates with the RAN device based on the first information.

In this embodiment of this application, in communication in a radio access network, the RAN network slice identifier is used to classify network slices. There is the correspondence between the RAN network slice identifier and the core network network slice identifier, so that the RAN network slice identifier may be allocated for communication based on a requirement of the radio access network, and therefore communication efficiency of the radio access network can be improved.

In this embodiment of this application, the RAN network slice identifier is used to perform a communication activity in the radio access network, and the RAN network slice identifier is used to classify and aggregate core network network slice identifiers, so that air interface overheads of the core network network slice identifiers can be reduced, and communication efficiency can be improved.

In this embodiment of this application, because the RAN network slice identifier instead of the core network network slice identifier is used in the radio access network to perform a communication activity in the radio access network, a possibility that the core network network slice identifier directly associated with a network slice is exposed in air interface transmission is reduced, so that security of the air interface transmission is improved.

In some examples, the first information further includes access control information corresponding to the at least one RAN network slice identifier, and that the terminal device communicates with the RAN device based on the first information includes: accessing, by the terminal device, a radio access network based on the access control information.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In some examples, the access control information includes an access factor, and the access factor includes at least one of the following: an access control barring parameter and a barring parameter for application-specific congestion control used for data communication. The accessing, by the terminal device, a radio access network based on the access control information includes: accessing, by the terminal device, the radio access network based on the access factor.

In some examples, the access factor is determined based on an access class or an access category corresponding to the at least one RAN network slice identifier.

In some examples, that the terminal device communicates with the RAN device based on the first information includes: sending, by the terminal device, a radio resource control RRC connection request message to the RAN device, where the RRC connection request message includes a first RAN network slice identifier corresponding to a network slice allowed to be accessed by the terminal device, and the first RAN slice identifier is determined based on the first information.

In some examples, the first information further includes information used to indicate the correspondence between the at least one RAN network slice identifier and the core network network slice identifier.

In some examples, a network slice corresponding to the at least one RAN network slice identifier includes a network slice allowed to be accessed by the terminal device.

In some examples, the method further includes: receiving, by the terminal device, third information from the RAN device, where the third information includes a first RAN network slice identifier corresponding to a network slice that the terminal device requests to access, and the third information is used by the RAN device to determine a core network device that needs to be accessed by the terminal device.

In some examples, the first message is carried in a radio resource control RRC connection complete message.

In some examples, the first information is carried in an RRC message or a broadcast message.

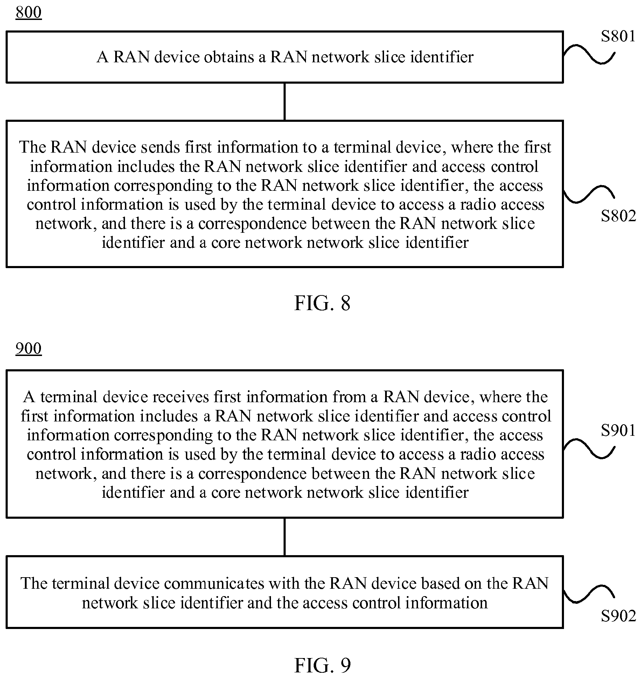

FIG. 8 is a schematic flowchart of a communication method 800 according to an embodiment of this application. As shown in FIG. 8, the method 800 includes the following steps.

S801. A RAN device obtains a RAN network slice identifier.

S802. The RAN device sends first information to a terminal device, where the first information includes the RAN network slice identifier and access control information corresponding to the RAN network slice identifier, the access control information is used by the terminal device to access a radio access network, and there is a correspondence between the RAN network slice identifier and a core network network slice identifier.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In some examples, the access control information includes an access factor, and the access factor includes at least one of the following: an access control barring parameter and a barring parameter for application-specific congestion control used for data communication.

In some examples, the access factor is determined based on an access class or an access category corresponding to the RAN network slice identifier.

In some examples, the method 800 further includes: receiving, by the RAN device, a radio resource control RRC connection request message from the terminal device, where the RRC connection request message includes a first RAN network slice identifier corresponding to a network slice that the terminal device requests to access.

In some examples, the method 800 further includes: sending, by the RAN device, an RRC connection response message to the terminal device based on the first RAN network slice identifier.

In some examples, the sending, by the RAN device, an RRC connection response message to the terminal device based on the first RAN network slice identifier includes: sending, by the RAN device, an RRC connection setup message to the terminal device when priority information corresponding to the first RAN network slice identifier meets a predetermined rule; or sending, by the RAN device, an RRC connection reject message to the terminal device when priority information corresponding to the second RRN network slice identifier does not meet a predetermined rule.

In some examples, the sending, by the RAN device, an RRC connection response message to the terminal device based on the first RAN network slice identifier includes: sending, by the RAN device, an RRC connection setup message to the terminal device when an idle network resource of the network slice corresponding to the first RAN network slice identifier is greater than or equal to a preset threshold; or sending, by the RAN device, an RRC connection reject message to the terminal device when an idle network resource of the network slice corresponding to the first RAN network slice identifier is less than a preset threshold.

In some examples, the first information is carried in a broadcast message.

FIG. 9 is a schematic flowchart of a communication method 900 according to an embodiment of this application. As shown in FIG. 9, the method 900 includes the following steps.

S901. A terminal device receives first information from a RAN device, where the first information includes a RAN network slice identifier and access control information corresponding to the RAN network slice identifier, the access control information is used by the terminal device to access a radio access network, and there is a correspondence between the RAN network slice identifier and a core network network slice identifier.

S902. The terminal device communicates with the RAN device based on the RAN network slice identifier and the access control information.

In this embodiment of this application, the terminal device may be instructed, based on the RAN network slice identifier, to perform a random access process, and core network network slice identifiers can be classified and aggregated by using the RAN network slice identifier, so that signaling content in the random access process is simplified, and communication efficiency is improved. Further, in this embodiment of this application, a security problem of using a core network network identifier is avoided, and security of air interface transmission is improved.

In some examples, the access control information includes an access factor, and the access factor includes at least one of the following: an access control barring parameter and a barring parameter for application-specific congestion control used for data communication.

In some examples, the access factor is determined based on an access class or an access category corresponding to the RAN network slice identifier.

In some examples, the method 900 further includes: sending, by the terminal device, an RRC connection request message to the RAN device, where the RRC connection request message includes a first RAN network slice identifier corresponding to a network slice that the terminal device requests to access.

In some examples, the first information is carried in a broadcast message.

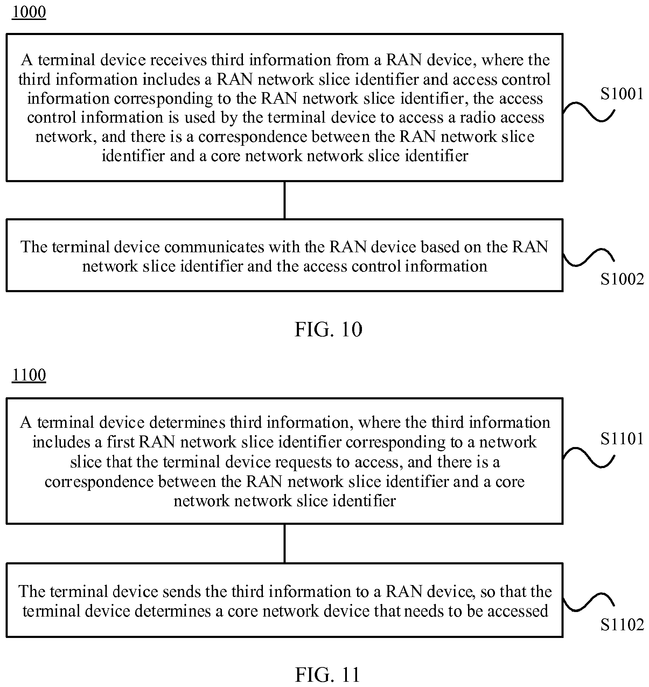

FIG. 10 is a schematic flowchart of a communication method 1000 according to an embodiment of this application. As shown in FIG. 10, the method 1000 includes the following steps.

S1001. A RAN device receives third information from a terminal device, where the third information includes a first RAN network slice identifier corresponding to a network slice that the terminal device requests to access, and there is a correspondence between the RAN network slice identifier and a core network network slice identifier.

S1002. The RAN device determines, based on the first RAN network slice identifier, a core network device that needs to be accessed by the terminal device.

In this embodiment of this application, the RAN device may select, based on the RAN network slice identifier, the core network device that needs to be accessed on a routing path, so that communication connection setup efficiency is improved.

In some examples, the first message is carried in a radio resource control RRC connection complete message.

FIG. 11 is a schematic flowchart of a communication method 1100 according to an embodiment of this application. As shown in FIG. 11, the method 1100 includes the following steps.

S1101. A terminal device determines third information, where the third information includes a first RAN network slice identifier corresponding to a network slice that the terminal device requests to access, and there is a correspondence between the RAN network slice identifier and a core network network slice identifier.

S1102. The terminal device sends the third information to a RAN device, so that the terminal device determines a core network device that needs to be accessed.

In this embodiment of this application, the RAN device may select, based on the RAN network slice identifier, the core network device that needs to be accessed on a routing path, so that communication connection setup efficiency is improved.

In some examples, the first message is carried in a radio resource control RRC connection complete message.

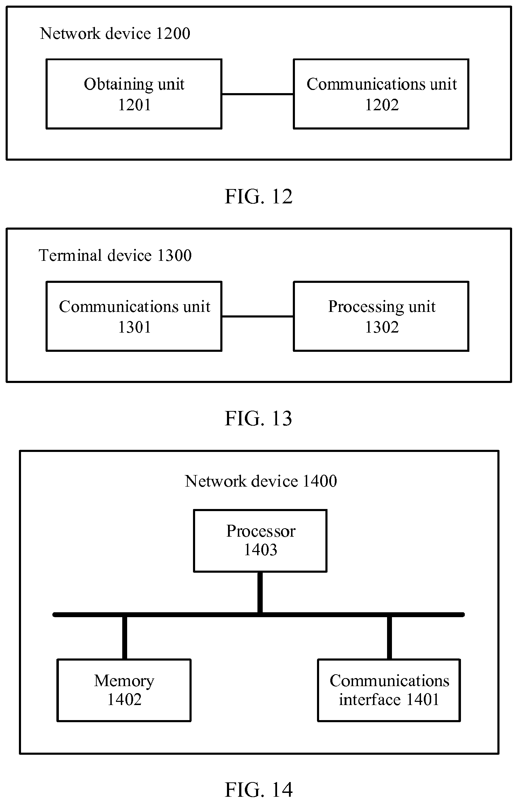

The communication methods in the embodiments of this application are described above with reference to FIG. 1 to FIG. 11. Apparatuses in the embodiments of this application are described below with reference to FIG. 12 to FIG. 15.

FIG. 12 is a schematic block diagram of a RAN device 1200 according to an embodiment of this application. It should be understood that the RAN device 1200 can perform the steps performed by the RAN device in the methods in FIG. 1 to FIG. 11. To avoid repetition, details are not described herein again. For example, the RAN device 1200 may perform the steps performed by the RAN device 1200 in FIG. 1 to FIG. 6. The RAN device 1400 may further perform the methods in FIG. 8 and FIG. 10. Specifically, the RAN device may perform S301 and S303 in FIG. 3, may perform S401, S402, S403, and S404 in FIG. 4, may perform S501 to S511 in FIG. 5, or may perform S601 and S603 in FIG. 6. The RAN device may include various types of base stations, such as a gNB, an NR base station, a macro base station, and a micro base station. The RAN device 1200 includes:
an obtaining unit 1201, configured to obtain information about at least one RAN network slice identifier; and
a communications unit 1202, configured to send first information to a terminal device, where the first information includes the at least one RAN network slice identifier, and there is a correspondence between the at least one RAN network slice identifier and a core network network slice identifier. The obtaining unit 1201 may be a receiver or a processor.

FIG. 13 is a schematic block diagram of a terminal device 1300 according to an embodiment of this application. It should be understood that the terminal device 1300 can perform the steps performed by the terminal device in the methods in FIG. 1 to FIG. 11. To avoid repetition, details are not described herein again. For example, the terminal device 1300 may perform the steps performed by the terminal device 1300 in FIG. 1 to FIG. 6. The terminal device 1300 may further perform the methods in FIG. 7, FIG. 9, and FIG. 11. Specifically, the terminal device may perform S301, S302, or S303 in FIG. 3, may perform S404 in FIG. 4, may perform S501 to S505, S510, and S511 in FIG. 5, or may perform S604 in FIG. 6.

The terminal device 1300 includes: a communications unit 1301, configured to receive first information from a RAN device, where the first information includes at least one RAN network slice identifier, and there is a correspondence between the at least one RAN network slice identifier and a core network network slice identifier; and
a processing unit 1302, configured to communicate with the RAN device based on the first information.

FIG. 14 is a schematic block diagram of a RAN device 1400 according to an embodiment of this application. It should be understood that the RAN device 1400 can perform the steps performed by the RAN device in the methods in FIG. 1 to FIG. 11. To avoid repetition, details are not described herein again. For example, the RAN device 1400 may perform the steps performed by the RAN device 1400 in FIG. 1 to FIG. 6. The RAN device 1400 may further perform the methods in FIG. 8 and FIG. 10. Specifically, the RAN device may perform S301 and S303 in FIG. 3, may perform S401, S402, S403, and S404 in FIG. 4, may perform S501 to S511 in FIG. 5, or may perform S601 and S603 in FIG. 6. The RAN device may include various types of base stations, such as a gNB, an NR base station, a macro base station, and a micro base station.

The RAN device 1400 includes:
a communications interface 1401;
a memory 1402, configured to store an instruction; and
a processor 1403, separately connected to the memory 1402 and the communications interface 1401 and configured to execute the instruction stored in the memory 1402, to perform the following steps when the instruction is executed: obtaining information about at least one RAN network slice identifier; and sending first information to a terminal device, where the first information includes the at least one RAN network slice identifier, and there is a correspondence between the at least one RAN network slice identifier and a core network network slice identifier.

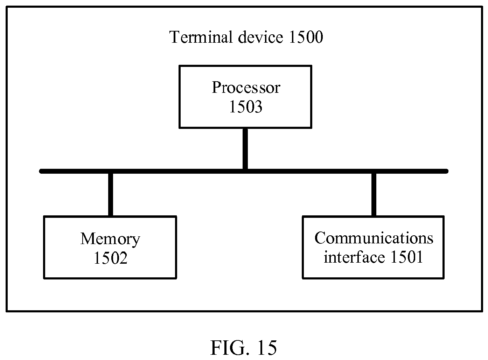

FIG. 15 is a schematic block diagram of a terminal device 1500 according to an embodiment of this application. It should be understood that the terminal device 1500 can perform the steps performed by the terminal device in the methods in FIG. 1 to FIG. 11. To avoid repetition, details are not described herein again. For example, the terminal device 1500 may perform the steps performed by the terminal device 1500 in FIG. 1 to FIG. 6. The terminal device 1500 may further perform the methods in FIG. 7, FIG. 9, and FIG. 11. Specifically, the terminal device may perform S301, S302, or S303 in FIG. 3, may perform S404 in FIG. 4, may perform S501 to S505, S510, and S511 in FIG. 5, or may perform S604 in FIG. 6.

The terminal device 1500 includes:
a communications interface 1501;
a memory 1502, configured to store an instruction; and
a processor 1503, separately connected to the memory 1502 and the communications interface 1501 and configured to execute the instruction stored in the memory 1502, to perform the following steps when the instruction is executed: receiving first information from a radio access network RAN device, where the first information includes at least one RAN network slice identifier, and there is a correspondence between the at least one RAN network slice identifier and a core network network slice identifier; and communicating with the RAN device based on the first information.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on a particular application and a design constraint condition of a technical solution. A skilled person may use different methods to implement the described functions for each particular application, but it should not be considered that the implementation goes beyond the scope of this application.

It may be clearly understood by the person skilled in the art that, for convenience and brevity of description, for specific working processes of the system, apparatus, and unit described above, refer to corresponding processes in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division. There may be another division manner in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve an objective of a solution in the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions, so that a computer device (which may be a personal computer, a server, a network device, or the like) is enabled to perform all or some of the steps in the method described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is limited only by the scope of the appended claims. Any variation or replacement readily figured out by a person skilled in the art within the technical scope defined by the appended claims shall fall within the protection scope of this application.

## Claims

1. A communication method (200), comprising:
obtaining (S201), by a radio access network RAN device, information about at least one RAN network slice identifier, wherein each of the at least one RAN network slice identifiers represents a classification set of core network slice identifiers, and each RAN network slice identifier corresponds to a plurality of core network slice identifiers; and
sending (S202), by the RAN device, first information to a terminal device, wherein the first information comprises the at least one RAN network slice identifier and information used to indicate a correspondence between each of the at least one RAN network slice identifier and the plurality of core network slice identifiers.

2. The communication method (200) according to claim 1, wherein the first information further comprises access control information corresponding to the at least one RAN network slice identifier, and the access control information comprises information for instructing the terminal device to access a radio access network.

3. The communication method (200) according to claim 2, wherein the access control information comprises an access factor, and the access factor comprises at least one of the following: an access control barring parameter and a barring parameter for application-specific congestion control used for data communication.

4. The communication method (200) according to claim 3, wherein the access factor is determined based on an access class or an access category corresponding to the at least one RAN network slice identifier.

5. The communication method (200) according to any one of claims 1 to 4, wherein the method further comprises: receiving, by the RAN device, third information from the terminal device, wherein the third information comprises a first RAN network slice identifier corresponding to a network slice that the terminal device requests to access.

6. The communication method (200) according to claim 5, wherein the third information is a radio resource control RRC connection request message, and the method further comprises: sending, by the RAN device, an RRC connection response message to the terminal device based on the first RAN network slice identifier.

7. The communication method (200) according to claim 5, wherein the method further comprises: determining, by the RAN device based on the first RAN network slice identifier, a core network device that needs to be accessed by the terminal device.

8. The communication method (200) according to any one of claims 1 to 7, wherein a network slice corresponding to the at least one RAN network slice identifier comprises a network slice allowed to be accessed by the terminal device.

9. The communication method (200) according to any one of claims 1 to 8, wherein the obtaining, by a RAN device, information about at least one RAN network slice identifier comprises:
receiving, by the RAN device, the information about the at least one RAN network slice identifier from a network manager.

10. The communication method (200) according to any one of claims 1 to 9, wherein the method further comprises:
sending, by the RAN device, second information to the core network device, wherein the second information is used to indicate the correspondence between the at least one RAN network slice identifier and the core network slice identifier.

11. A communication method (700), comprising:
receiving (S701), by a terminal device, first information from a radio access network RAN device, wherein the first information comprises at least one RAN network slice identifier and information used to indicate a correspondence between each of the at least one RAN network slice identifier and the plurality of core network slice identifiers, wherein each of the at least one RAN network slice identifier represents a classification set of core network slice identifiers, and each RAN network slice identifier corresponds to a plurality of core network slice identifiers; and
communicating (S702), by the terminal device, with the RAN device based on the first information.

12. The communication method (700) according to claim 11, wherein the first information further comprises access control information corresponding to the at least one RAN network slice identifier; and
the communicating, by the terminal device, with the RAN device based on the first information comprises:
accessing, by the terminal device, a radio access network based on the access control information.

13. A network device (1400), comprising:
a communications interface (1401);
a memory (1402), configured to store an instruction; and
a processor (1403), separately connected to the memory (1402) and the communications interface (1401) and configured to execute the instruction stored in the memory (1402), causing the network device
to perform the following steps when the instruction is executed:
obtaining information about at least one RAN network slice identifier, wherein each of the at least one RAN network slice identifiers represents a classification set of core network slice identifiers, and each RAN network slice identifier corresponds to a plurality of core network slice identifiers; and
sending, by the network device (1400), first information to a terminal device, wherein the first information comprises the at least one RAN network slice identifier and information used to indicate a correspondence between each of the at least one RAN network slice identifier and the plurality of core network slice identifiers.

14. A terminal device (1500), comprising:
a communications interface (1501);
a memory (1502), configured to store an instruction; and
a processor (1503), separately connected to the memory (1502) and the communications interface (1501) and configured to execute the instruction stored in the memory (1502), causing the terminal
to perform the following steps when the instruction is executed:
receiving first information from a radio access network RAN device, wherein the first information comprises at least one RAN network slice identifier and information used to indicate a correspondence between each of the at least one RAN network slice identifier and the plurality of core network slice identifiers, wherein each of the at least one RAN network slice identifier represents a classification set of core network slice identifiers, and each RAN network slice identifier corresponds to a plurality of core network slice identifiers; and
communicating with the RAN device based on the first information.

## Patentansprüche

1. Kommunikationsverfahren (200), Folgendes umfassend:
Erhalten (S201) von Informationen über mindestens einen RAN-Netzwerk-Slice-Bezeichner durch eine Funkzugangsnetzwerk-RAN-Vorrichtung, wobei jeder der mindestens einen RAN-Netzwerk-Slice-Bezeichner einen Klassifizierungssatz von Kernnetzwerk-Slice-Bezeichnern darstellt und jeder RAN-Netzwerk-Slice-Bezeichner einer Vielzahl von Kernnetzwerk-Slice-Bezeichnern entspricht; und
Senden (S202) von ersten Informationen durch die RAN-Vorrichtung an ein Endgerät, wobei die ersten Informationen den mindestens einen RAN-Netzwerk-Slice-Bezeichner und Informationen umfassen, die verwendet werden, um eine Entsprechung zwischen jedem des mindestens einen RAN-Netzwerk-Slice-Bezeichners und der Vielzahl von Kernnetzwerk-Slice-Bezeichnern anzuzeigen.

2. Kommunikationsverfahren (200) gemäß Anspruch 1, wobei die ersten Informationen ferner Zugangssteuerungsinformationen umfassen, die dem mindestens einen RAN-Netzwerk-Slice-Bezeichner entsprechen, und die Zugangssteuerungsinformationen Informationen umfassen, um das Endgerät anzuweisen, auf ein Funkzugangsnetzwerk zuzugreifen.

3. Kommunikationsverfahren (200) gemäß Anspruch 2, wobei die Zugangssteuerungsinformationen einen Zugangsfaktor umfassen und der Zugangsfaktor mindestens eines der Folgenden umfasst:
einen Zugangssteuerungs-Sperrparameter und einen Sperrparameter für anwendungsspezifische Überlastungssteuerung, die für die Datenkommunikation verwendet wird.

4. Kommunikationsverfahren (200) gemäß Anspruch 3, wobei der Zugangsfaktor basierend auf einer Zugangsklasse oder einer Zugangskategorie bestimmt wird, die dem mindestens einen RAN-Netzwerk-Slice-Bezeichner entspricht.

5. Kommunikationsverfahren (200) gemäß einem der Ansprüche 1 bis 4, wobei das Verfahren ferner Folgendes umfasst: Empfangen von dritten Informationen von dem Endgerät durch die RAN-Vorrichtung, wobei die dritten Informationen einen ersten RAN-Netzwerk-Slice-Bezeichner umfassen, der einem Netzwerk-Slice entspricht, zu dem das Endgerät Zugang anfordert.

6. Kommunikationsverfahren (200) gemäß Anspruch 5, wobei die dritten Informationen eine Funkressourcensteuerungs,RRC,-Verbindungsanforderungsnachricht sind, und das Verfahren ferner Folgendes umfasst: Senden einer RRC-Verbindungsantwortnachricht durch die RAN-Vorrichtung an das Endgerät basierend auf dem ersten RAN-Netzwerk-Slice-Bezeichner.

7. Kommunikationsverfahren (200) gemäß Anspruch 5, wobei das Verfahren ferner Folgendes umfasst: Bestimmen einer Kernnetzwerkvorrichtung, auf die das Endgerät zugreifen muss, durch die RAN-Vorrichtung basierend auf dem ersten RAN-Netzwerk-Slice-Bezeichner.

8. Kommunikationsverfahren (200) gemäß einem der Ansprüche 1 bis 7, wobei ein Netzwerk-Slice, die dem mindestens einen RAN-Netzwerk-Slice-Bezeichner entspricht, einen Netzwerk-Slice umfasst, auf den das Endgerät zugreifen darf.

9. Kommunikationsverfahren (200) gemäß einem der Ansprüche 1 bis 8, wobei das Erhalten von Informationen über mindestens einen RAN-Netzwerk-Slice-Bezeichner durch eine RAN-Vorrichtung Folgendes umfasst:
Empfangen der Informationen über den mindestens einen RAN-Netzwerk-Slice-Bezeichner von einem Netzwerkverwalter durch die RAN-Vorrichtung.

10. Kommunikationsverfahren (200) gemäß einem der Ansprüche 1 bis 9, wobei das Verfahren ferner Folgendes umfasst:
Senden von zweiten Informationen durch die RAN-Vorrichtung an die Kernnetzwerkvorrichtung, wobei die zweiten Informationen verwendet werden, um die Entsprechung zwischen dem mindestens einen RAN-Netzwerk-Slice-Bezeichner und dem Kernnetzwerk-Slice-Bezeichner anzuzeigen.

11. Kommunikationsverfahren (700), Folgendes umfassend:
Empfangen (S701) von ersten Informationen von einer Funkzugangsnetzwerk-RAN-Vorrichtung durch ein Endgerät, wobei die ersten Informationen mindestens einen RAN-Netzwerk-Slice-Bezeichner und Informationen umfassen, die verwendet werden, um eine Entsprechung zwischen jedem des mindestens einen RAN-Netzwerk-Slice-Bezeichners und der Vielzahl von Kernnetzwerk-Slice-Bezeichnern anzuzeigen, wobei jeder des mindestens einen RAN-Netzwerk-Slice-Bezeichners einen Klassifizierungssatz von Kernnetzwerk-Slice-Bezeichnern darstellt, und jeder RAN-Netzwerk-Slice-Bezeichner einer Vielzahl von Kernnetzwerk-Slice-Bezeichnern entspricht; und
Kommunizieren (S702) mit der RAN-Vorrichtung durch das Endgerät basierend auf den ersten Informationen.

12. Kommunikationsverfahren (700) gemäß Anspruch 11, wobei die ersten Informationen ferner Zugangssteuerungsinformationen umfassen, die dem mindestens einen RAN-Netzwerk-Slice-Bezeichner entsprechen; und
das Kommunizieren mit der RAN-Vorrichtung durch das Endgerät basierend auf den ersten Informationen Folgendes umfasst:
Zugreifen auf ein Funkzugangsnetzwerk durch das Endgerät basierend auf den Zugangssteuerungsinformationen.

13. Netzwerkvorrichtung (1400), Folgendes umfassend:
eine Kommunikationsschnittstelle (1401);
einen Speicher (1402), der dazu konfiguriert ist, eine Anweisung zu speichern; und
einen Prozessor (1403), der separat mit dem Speicher (1402) und der Kommunikationsschnittstelle (1401) verbunden und dazu konfiguriert ist, die in dem Speicher (1402) gespeicherte Anweisung auszuführen, wodurch die Netzwerkvorrichtung veranlasst wird, die folgenden Schritte durchzuführen, wenn die Anweisung ausgeführt wird:
Erhalten von Informationen über mindestens einen RAN-Netzwerk-Slice-Bezeichner, wobei jeder der mindestens einen RAN-Netzwerk-Slice-Bezeichner einen Klassifizierungssatz von Kernnetzwerk-Slice-Bezeichnern darstellt und jeder RAN-Netzwerk-Slice-Bezeichner einer Vielzahl von Kernnetzwerk-Slice-Bezeichnern entspricht; und
Senden von ersten Informationen durch die Netzwerkvorrichtung (1400) an ein Endgerät, wobei die ersten Informationen den mindestens einen RAN-Netzwerk-Slice-Bezeichner und Informationen umfassen, die verwendet werden, um eine Entsprechung zwischen jedem des mindestens einen RAN-Netzwerk-Slice-Bezeichners und der Vielzahl von Kernnetzwerk-Slice-Bezeichnern anzuzeigen.

14. Endgerät (1500), Folgendes umfassend:
eine Kommunikationsschnittstelle (1501);
einen Speicher (1502), der dazu konfiguriert ist, eine Anweisung zu speichern; und
einen Prozessor (1503), der separat mit dem Speicher (1502) und der Kommunikationsschnittstelle (1501) verbunden und dazu konfiguriert ist, die in dem Speicher (1502) gespeicherte Anweisung auszuführen, wodurch das Endgerät veranlasst wird, die folgenden Schritte durchzuführen, wenn die Anweisung ausgeführt wird:
Empfangen von ersten Informationen von einer Funkzugangsnetzwerk-RAN-Vorrichtung, wobei die ersten Informationen mindestens einen RAN-Netzwerk-Slice-Bezeichner und Informationen umfassen, die verwendet werden, um eine Entsprechung zwischen jedem des mindestens einen RAN-Netzwerk-Slice-Bezeichners und der Vielzahl von Kernnetzwerk-Slice-Bezeichnern anzuzeigen, wobei jeder des mindestens einen RAN-Netzwerk-Slice-Bezeichners einen Klassifizierungssatz von Kernnetzwerk-Slice-Bezeichnern darstellt, und jeder RAN-Netzwerk-Slice-Bezeichner einer Vielzahl von Kernnetzwerk-Slice-Bezeichnern entspricht; und
Kommunizieren mit der RAN-Vorrichtung basierend auf den ersten Informationen.

## Revendications

1. Procédé de communication (200), comprenant :
l'obtention (S201), par un dispositif de réseau d'accès radio RAN, d'informations concernant au moins un identifiant de tranche de réseau RAN, dans lequel chacun de l'au moins un identifiant de tranche de réseau RAN représente un ensemble de classification d'identifiants de tranche de réseau central, et chaque identifiant de tranche de réseau RAN correspond à une pluralité d'identifiants de tranche de réseau central ; et
l'envoi (S202), par le dispositif RAN, de premières informations à un dispositif terminal, dans lequel les premières informations comprennent l'au moins un identifiant de tranche de réseau RAN et des informations utilisées pour indiquer une correspondance entre chacun de l'au moins un identifiant de tranche de réseau RAN et la pluralité d'identifiants de tranche de réseau central.

2. Procédé de communication (200) selon la revendication 1, dans lequel les premières informations comprennent également des informations de commande d'accès correspondant à l'au moins un identifiant de tranche de réseau RAN, et les informations de commande d'accès comprennent des informations pour demander au dispositif terminal d'accéder à un réseau d'accès radio.

3. Procédé de communication (200) selon la revendication 2, dans lequel les informations de commande d'accès comprennent un facteur d'accès, et le facteur d'accès comprend au moins l'un des éléments suivants : un paramètre d'interdiction de commande d'accès et un paramètre d'interdiction pour une commande d'encombrement spécifique à l'application utilisé pour la communication de données.

4. Procédé de communication (200) selon la revendication 3, dans lequel le facteur d'accès est déterminé sur la base d'une classe d'accès ou d'une catégorie d'accès correspondant à l'au moins un identifiant de tranche de réseau RAN.

5. Procédé de communication (200) selon l'une quelconque des revendications 1 à 4, dans lequel le procédé comprend également : la réception, par le dispositif RAN, de troisièmes informations provenant du dispositif terminal, dans lequel les troisièmes informations comprennent un premier identifiant de tranche de réseau RAN correspondant à une tranche de réseau à laquelle le dispositif terminal demande à accéder.

6. Procédé de communication (200) selon la revendication 5, dans lequel les troisièmes informations sont un message de demande de connexion de commande de ressources radio RRC, et le procédé comprend également : l'envoi, par le dispositif RAN, d'un message de réponse de connexion RRC au dispositif terminal sur la base du premier identifiant de tranche de réseau RAN.

7. Procédé de communication (200) selon la revendication 5, dans lequel le procédé comprend également : la détermination, par le dispositif RAN sur la base du premier identifiant de tranche de réseau RAN, d'un dispositif de réseau central auquel le dispositif terminal doit accéder.

8. Procédé de communication (200) selon l'une quelconque des revendications 1 à 7, dans lequel une tranche de réseau correspondant à l'au moins un identifiant de tranche de réseau RAN comprend une tranche de réseau dont l'accès est autorisé par le dispositif terminal.

9. Procédé de communication (200) selon l'une quelconque des revendications 1 à 8, dans lequel l'obtention, par un dispositif RAN, d'informations concernant au moins un identifiant de tranche de réseau RAN comprend :
la réception, par le dispositif RAN, des informations concernant l'au moins un identifiant de tranche de réseau RAN provenant d'un gestionnaire de réseau.

10. Procédé de communication (200) selon l'une quelconque des revendications 1 à 9, dans lequel le procédé comprend également :
l'envoi, par le dispositif RAN, de deuxièmes informations au dispositif de réseau central, dans lequel les deuxièmes informations sont utilisées pour indiquer la correspondance entre l'au moins un identifiant de tranche de réseau RAN et l'identifiant de tranche de réseau central.

11. Procédé de communication (700), comprenant :
la réception (S701), par un dispositif terminal, de premières informations provenant d'un dispositif de réseau d'accès radio RAN, dans lequel les premières informations comprennent au moins un identifiant de tranche de réseau RAN et des informations utilisées pour indiquer une correspondance entre chacun de l'au moins un identifiant de tranche de réseau RAN et la pluralité d'identifiants de tranche de réseau central, dans lequel chacun de l'au moins un identifiant de tranche de réseau RAN représente un ensemble de classification d'identifiants de tranche de réseau central, et chaque identifiant de tranche de réseau RAN correspond à une pluralité d'identifiants de tranche de réseau central ; et
la communication (S702), par le dispositif terminal, avec le dispositif RAN sur la base des premières informations.

12. Procédé de communication (700) selon la revendication 11, dans lequel les premières informations comprennent également des informations de commande d'accès correspondant à l'au moins un identifiant de tranche de réseau RAN ; et
la communication, par le dispositif terminal, avec le dispositif RAN sur la base des premières informations comprend :
l'accès, par le dispositif terminal, à un réseau d'accès radio sur la base des informations de commande d'accès.

13. Dispositif de réseau (1400), comprenant :
une interface de communication (1401) ;
une mémoire (1402), configurée pour stocker une instruction ; et
un processeur (1403), connecté séparément à la mémoire (1402) et à l'interface de communication (1401) et configuré pour exécuter l'instruction stockée dans la mémoire (1402), amenant le dispositif de réseau à effectuer les étapes suivantes lorsque l'instruction est exécutée :
l'obtention d'informations concernant au moins un identifiant de tranche de réseau RAN, dans lequel chacun de l'au moins un identifiant de tranche de réseau RAN représente un ensemble de classification d'identifiants de tranche de réseau central, et chaque identifiant de tranche de réseau RAN correspond à une pluralité d'identifiants de tranche de réseau central ; et
l'envoi, par le dispositif de réseau (1400), de premières informations à un dispositif terminal, dans lequel les premières informations comprennent l'au moins un identifiant de tranche de réseau RAN et des informations utilisées pour indiquer une correspondance entre chacun de l'au moins un identifiant de tranche de réseau RAN et la pluralité d'identifiants de tranche de réseau central.

14. Dispositif terminal (1500), comprenant :
une interface de communication (1501) ;
une mémoire (1502), configurée pour stocker une instruction ; et
un processeur (1503), connecté séparément à la mémoire (1502) et à l'interface de communication (1501) et configuré pour exécuter l'instruction stockée dans la mémoire (1502), amenant le terminal à effectuer les étapes suivantes lorsque l'instruction est exécutée :
la réception de premières informations provenant d'un dispositif de réseau d'accès radio RAN, dans lequel les premières informations comprennent au moins un identifiant de tranche de réseau RAN et des informations utilisées pour indiquer une correspondance entre chacun de l'au moins un identifiant de tranche de réseau RAN et la pluralité d'identifiants de tranche de réseau central, dans lequel chacun de l'au moins un identifiant de tranche de réseau RAN représente un ensemble de classification d'identifiants de tranche de réseau central, et chaque identifiant de tranche de réseau RAN correspond à une pluralité d'identifiants de tranche de réseau central ; et
la communication avec le dispositif RAN sur la base des premières informations.
